# EUROPEAN PATENT APPLICATION

(11) **EP 4 827 136 A1**
(43) Date of publication of application: **21.10.2026**
(21) Application number: 25738379.4
(22) Date of filing: 06.01.2025
(51) Int. Cl.: H04W 8/02

(54) **COMMUNICATION METHOD AND RELATED DEVICE AND SYSTEM**

(30) Priority: 12.01.2024 CN 202410056545
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); YING, Jiangwei, Shenzhen, Guangdong 518129 (CN)
(74) Representative: Huawei European IPR
(86) International application number: PCT/CN2025/070871
(87) International publication number: WO 2025/148848

(57) **Abstract**

This application provides a communication method and a related apparatus and system, enabling flexible responses to sensing requests based on sensing areas, thereby meeting service requirement constraints for different sensing areas. The method includes: A sensing function network element receives a sensing request, where the sensing request is used to request sensing in a sensing area; and the sensing function network element obtains a target service requirement, where the target service requirement is determined based on the sensing area, and the target service requirement is used to determine a sensing KPI.

## Description

This application claims priority to Chinese Patent Application No. 202410056545.8, filed with the China National Intellectual Property Administration on January 12, 2024 and entitled "COMMUNICATION METHOD AND RELATED APPARATUS AND SYSTEM", which is incorporated herein by reference in its entirety.

### TECHNICAL FIELD

This application relates to the field of communication technologies, and in particular, to a communication method and a related apparatus and system.

### BACKGROUND

In addition to communication capability, a wireless communication system also has sensing capability. The wireless communication system having sensing capability can perform sensing and identification on specific areas, objects, or events, addressing sensing requirements in various scenarios, for example, sensing and prediction of people, objects, or the like in an environment.

In current sensing procedures, a sensing application may send, either directly or via a network capability exposure function network element, a sensing request that carries a sensing area and a service requirement to a network element responsible for sensing in a network, to request to use the service requirement for sensing in the sensing area. In response to the sensing request, the network element responsible for sensing may initiate a sensing procedure for sensing in the specific sensing area based on the service requirement.

However, currently, no security-related procedure is available for sensing in the specific sensing area.

### SUMMARY

This application provides a communication method and a related apparatus and system, enabling flexible responses to sensing requests based on a sensing area, thereby meeting service requirement constraints for different sensing areas.

According to a first aspect, this application provides a communication method, and the method may be applied to a communication apparatus. For example, the communication apparatus may be a sensing function network element, or may be a component (such as a chip or a chip system) configured in the sensing function network element, or may be a logical module or software that can implement all or some functions of the sensing function network element. This is not limited in this application. For ease of understanding and description, the following describes the method by using an example in which the sensing function network element is the communication apparatus.

For example, the method includes: receiving a sensing request, where the sensing request is used to request sensing in a sensing area; and obtaining a target service requirement, where the target service requirement is determined based on the sensing area, and the target service requirement is used to determine a sensing key performance indicator (key performance indicator, KPI).

The sensing request indicates the sensing area.

The target service requirement is determined based on the sensing area. In other words, a service requirement corresponding to the sensing area in which sensing is requested by the sensing request is referred to as the target service requirement.

It may be understood that the sensing KPI defines information such as a confidence interval, sensing positioning precision (including vertical and horizontal precision), sensing velocity precision (including vertical and horizontal precision), sensing resolution (including spatial and velocity resolution), a maximum sensing service delay, and a refresh rate. In other words, a parameter included in the sensing KPI is used to describe precision required for obtaining sensing data.

Based on this technical solution, after receiving the sensing request used to request sensing in the sensing area, the sensing function network element may use the sensing area as an input to obtain the target service requirement corresponding to the sensing area. In other words, after receiving different sensing requests used to request sensing in different sensing areas, the sensing function network element may enable flexible responses to the sensing requests based on the sensing areas, thereby meeting service requirement constraints for different sensing areas, and resolving an issue in which all service requirements are the same when sensing is performed in different sensing areas for the same service requirement.

In a possible implementation, the obtaining the target service requirement includes: sending a service requirement request to a data management function network element, where the service requirement request indicates the sensing area; receiving N service requirements from the data management function network element, where the N service requirements are determined based on the sensing area, and N is a positive integer; and obtaining the target service requirement from the N service requirements.

The service requirement request is used to obtain the target service requirement.

Optionally, when N>1, the method further includes: receiving, from the data management function network element, a correspondence between the N service requirements and N ranges of a quantity of terminals.

In another possible implementation, the obtaining the target service requirement includes: determining N service requirements based on the sensing area and a mapping relationship, where the mapping relationship indicates a correspondence between at least one sensing area and at least one service requirement, and N is a positive integer; and obtaining the target service requirement from the N service requirements.

It may be understood that, when each of the at least one sensing area corresponds to one service requirement, N=1; or when the sensing area in the at least one sensing area corresponds to a plurality of service requirements, N>1.

Optionally, when the sensing area corresponds to N time periods, and the N time periods correspond to the N service requirements, the obtaining the target service requirement from the N service requirements includes: when N>1, obtaining the target service requirement from the N service requirements based on a correspondence between the N service requirements and the N time periods, and time information of the sensing request.

It may be understood that, in the N service requirements and the N time periods, at least N time periods are different from each other.

Because the N service requirements correspond to the N time periods, a unique service requirement may be obtained from the N service requirements based on the time information of the sensing request, and the service requirement is the target service requirement.

In another possible implementation, the sensing request carries N service requirements, and N is a positive integer; and the obtaining the target service requirement includes: obtaining the target service requirement from the N service requirements.

Optionally, when N>1, the sensing request further carries a correspondence between the N service requirements and N ranges of a quantity of terminals.

With reference to the foregoing three possible implementations, when N=1, the N service requirements are the target service requirement.

Optionally, the obtaining the target service requirement from the N service requirements includes: when N>1, obtaining the target service requirement from the N service requirements based on the correspondence between the N service requirements and the N ranges of the quantity of terminals, and a quantity of terminals included in the sensing area.

It may be understood that the N service requirements and the N ranges of the quantity of terminals include at least N ranges that are different from each other.

Because the N service requirements correspond to the N ranges of the quantity of terminals, the unique service requirement may be obtained from the N service requirements based on the quantity of terminals included in the sensing area, and the service requirement is the target service requirement.

Optionally, before the determining the target service requirement from the N service requirements based on the correspondence between the N service requirements and the N ranges of the quantity of terminals, and the quantity of terminals included in the sensing area, the method further includes: obtaining, from an access and mobility management function network element, the quantity of terminals included in the sensing area.

For example, the obtaining, from the access and mobility management function network element, the quantity of terminals included in the sensing area includes: sending an obtaining request to the access and mobility management function network element, where the obtaining request is used to request to obtain the quantity of terminals included in the sensing area; receiving an obtaining response from the AMF network element, where the obtaining response indicates the quantity of terminals included in the sensing area; and determining, based on the obtaining response, the quantity of terminals included in the sensing area.

Optionally, before the obtaining the target service requirement, the method further includes: determining that sensing is allowed in the sensing area.

It may be understood that, when it is determined that sensing is not allowed in the sensing area, the obtaining the target service requirement is replaced with: sending a rejection message to an application function network element, where the rejection message is used to reject the sensing request. In other words, the obtaining the target service requirement is performed when it is determined that sensing is allowed in the sensing area.

Optionally, the sensing request carries at least one of the following: an identifier of the application function network element, an indication of the sensing area, a requested service type, or a requested service requirement; and the determining that sensing is allowed in the sensing area includes: determining that sensing is allowed in the sensing area when at least one of the following conditions is met: The sensing area belongs to a predefined area range, the service type is a predefined service type allowed to be triggered, a sensing KPI corresponding to the requested service requirement belongs to a predefined sensing KPI range, the time information of the sensing request belongs to a predefined time interval, or the application function network element identified by the identifier of the application function network element is a predefined application function network element allowed to be triggered.

For example, when the sensing request carries the identifier of the application function network element, the indication of the sensing area, the requested service type, or the requested service requirement, it is determined that sensing is allowed in the sensing area provided that one or more of the identifier of the application function network element, the sensing area, the requested service type, and the requested service requirement meet the foregoing condition. For example, when the identifier of the application function network element and the sensing area meet the foregoing condition, but the requested service type and the requested service requirement do not meet the foregoing condition, it is determined that sensing is allowed in the sensing area.

Optionally, the sensing request carries at least one of the following: an identifier of the application function network element, an indication of the sensing area, a requested service type, or a requested service requirement; and before the obtaining the target service requirement, the method further includes: obtaining the target service requirement when it is determined that at least one of the following conditions is met: The sensing area belongs to a predefined area range, the service type is a predefined service type allowed to be triggered, a sensing KPI corresponding to the requested service requirement belongs to a predefined sensing KPI range, the time information of the sensing request belongs to a predefined time interval, or the application function network element identified by the identifier of the application function network element is a predefined application function network element allowed to be triggered.

For example, when the sensing request carries the identifier of the application function network element, the indication of the sensing area, the requested service type, or the requested service requirement, the target service requirement is obtained provided that one or more of the identifier of the application function network element, the sensing area, the requested service type, and the requested service requirement meet the foregoing condition. For example, when the identifier of the application function network element and the sensing area meet the foregoing condition, but the requested service type and the requested service requirement do not meet the foregoing condition, the target service requirement is obtained.

Optionally, the sensing request is from the application function network element, the sensing request carries the requested service requirement, and the method further includes: sending a service requirement confirmation request to the application function network element, where the service requirement confirmation request is used to request to use the target service requirement, and the target service requirement is different from the requested service requirement; and receiving a service requirement confirmation reply from the application function network element, where the service requirement confirmation reply indicates consent or non-consent to using the target service requirement.

For example, when the service requirement confirmation reply indicates consent to using the target service requirement, a sensing procedure is initiated based on the target service requirement; or when the service requirement confirmation reply indicates non-consent to using the target service requirement, it is determined that sensing is not allowed.

Optionally, the method further includes: when it is determined that sensing is not allowed, sending the rejection message to the application function network element, where the rejection message is used to reject the sensing request.

Optionally, the method further includes: receiving a parameter configuration request, where the parameter configuration request includes the correspondence between the at least one sensing area and the at least one service requirement; and determining the mapping relationship based on the parameter configuration request.

According to a second aspect, this application provides a communication method, and the method may be applied to a communication apparatus. For example, the communication apparatus may be a data management network element, or may be a component (such as a chip or a chip system) configured in the data management network element, or may be a logical module or software that can implement all or some functions of the data management network element. This is not limited in this application. For ease of understanding and description, the following describes the method by using an example in which the data management network element is the communication apparatus.

For example, the method includes: receiving a service requirement request from a sensing function network element, where the service requirement request indicates a sensing area; determining N service requirements based on the sensing area and a mapping relationship, where the mapping relationship indicates a correspondence between at least one sensing area and at least one service requirement; and sending the N service requirements to the sensing function network element.

The service requirement request is used to request a target service requirement, and the target service requirement is used to determine a sensing KPI. The N service requirements include the target service requirement, and N is a positive integer.

Based on this technical solution, after receiving the service requirement used to request to obtain the target service requirement, the data management network element may obtain, based on the sensing area and the mapping relationship, the at least one service requirement corresponding to the sensing area, and send the obtained at least one service requirement to the sensing function network element, so that the sensing function network element obtains the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

Optionally, when N=1, the N service requirements are the target service requirement.

It may be understood that when each of the at least one sensing area corresponds to one service requirement, N=1.

Optionally, when N=1, the determining the N service requirements based on the sensing area and the mapping relationship includes: determining the at least one service requirement based on the sensing area and the mapping relationship; and determining the N service requirements from the at least one service requirement based on a correspondence between the at least one service requirement and at least one time period, and time information of the service requirement request.

Because the at least one service requirement is in one-to-one correspondence with the at least one time period, the data management network element determines a unique service requirement based on the time information of the service requirement request, where the service requirement is the target service requirement.

The time information of the service requirement request may be time at which the data management network element receives the service requirement request.

Optionally, when N>1, the method further includes: sending, to the SF network element, a correspondence between the N service requirements and N ranges of a quantity of terminals, so that the SF can determine the target service requirement from the N service requirements based on the correspondence and a quantity of terminals included in the sensing area.

Optionally, the method further includes: receiving a sensing authorization request from a network capability exposure function network element, where the sensing authorization request is used to request authorization of a sensing request from an application function network element, and the sensing request is used to request sensing in the sensing area; determining whether to authorize the sensing request; and sending an authorization message to the network capability exposure function network element when it is determined to perform authorization, where the authorization message is used to authorize the sensing request; or sending an authorization rejection message to the network capability exposure function network element when it is determined not to perform authorization, where the authorization rejection message is used to reject authorization of the sensing request.

Optionally, the determining whether to authorize the sensing request includes: determining, based on an identifier of the application function network element, whether to authorize the sensing request.

Optionally, the method further includes: when determining, based on the identifier of the application function network element, to authorize the sensing request, determining whether the requested service requirement meets the service requirement corresponding to the sensing area included in the mapping relationship; and when the service requirement is met, determining to authorize the sensing request; or when the service requirement is not met, determining to reject the sensing request.

Optionally, the method further includes: receiving a parameter configuration request, where the parameter configuration request includes the correspondence between the at least one sensing area and the at least one service requirement; and determining the mapping relationship based on the parameter configuration request.

According to a third aspect, this application provides a communication method, and the method may be applied to a communication apparatus. For example, the communication apparatus may be a data management network element, or may be a component (such as a chip or a chip system) configured in the data management network element, or may be a logical module or software that can implement all or some functions of the data management network element. This is not limited in this application. For ease of understanding and description, the following describes the method by using an example in which the data management network element is the communication apparatus.

For example, the method includes: receiving a sensing authorization request from a network capability exposure function network element, where the sensing authorization request is used to request authorization of a sensing request from an application function network element, and the sensing request is used to request sensing in a sensing area; and when determining to authorize the sensing request, determining N service requirements based on the sensing area and a mapping relationship, where the mapping relationship indicates a correspondence between at least one sensing area and at least one service requirement; and sending the N service requirements to the network capability exposure function network element.

For descriptions of determining, by the data management network element, the N service requirements based on the sensing area and the mapping relationship, refer to related descriptions in the second aspect. Details are not described herein again.

Based on this technical solution, when receiving the sensing authorization request and determining to authorize the sensing request, the data management network element may obtain, based on the sensing area and the mapping relationship, the at least one service requirement corresponding to the sensing area, send the obtained at least one service requirement to the network capability exposure function network element, and further send the at least one service requirement to a sensing function network element, so that the sensing function network element can obtain the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

Optionally, N>1, and the method further includes: sending, to the network capability exposure function network element, a correspondence between the N service requirements and N ranges of a quantity of terminals.

Optionally, the sensing authorization request carries an identifier of the application function network element, and the method further includes: determining, based on the identifier of the application function network element, whether to authorize the sensing request.

For example, if the application function network element identified by the identifier of the application function network element belongs to a predefined range of application function network elements that are allowed to be authorized, the data management network element may determine to authorize the sensing request; or if the application function network element identified by the identifier of the application function network element does not belong to a predefined range of application function network elements that are allowed to be authorized, the data management network element determines to reject the sensing request.

Optionally, the sensing authorization request further carries a requested service requirement, and the method further includes: when determining, based on the identifier of the application function network element, to authorize the sensing request, determining whether the requested service requirement meets the service requirement corresponding to the sensing area included in the mapping relationship; and when the service requirement is not met, determining to reject the sensing request; or when the service requirement is met, determining to authorize the sensing request.

In other words, when determining, based on the identifier of the application function network element, to authorize the sensing request, the data management network element further determines whether the requested service requirement meets the service requirement corresponding to the sensing area included in the mapping relationship.

It may be understood that the N service requirements may be carried in an authorization message, and the correspondence between the N service requirements and the N ranges of the quantity of terminals may also be carried in the authorization message.

According to a fourth aspect, this application provides a communication method, and the method may be applied to a communication apparatus. For example, the communication apparatus may be an application function network element, or may be a component (such as a chip or a chip system) configured in the application function network element, or may be a logical module or software that can implement all or some functions of the application function network element. This is not limited in this application. For ease of understanding and description, the following describes the method by using an example in which the application function network element is the communication apparatus.

For example, the method includes: receiving a service requirement confirmation request from a sensing function network element, where the service requirement confirmation request is used to request to use a target service requirement, and the target service requirement is different from a requested service requirement; and sending a service requirement confirmation reply to the sensing function network element, where the service requirement confirmation reply indicates consent or non-consent to using the target service requirement.

Optionally, when the service requirement confirmation reply indicates non-consent to using the target service requirement, a rejection message is received from the sensing function network element, where the rejection message is used to reject the sensing request.

According to a fifth aspect, this application provides a communication method, applied to a system including a sensing function network element and a data management network element, and the method includes: The sensing function network element receives a sensing request, where the sensing request is used to request sensing in a sensing area; the sensing function network element sends a service requirement request to the data management network element, where the service requirement request carries the sensing area; the data management network element determines N service requirements based on the sensing area and a mapping relationship, where the N service requirements include a target service requirement, and the target service requirement is used to determine a sensing KPI; and the data management network element sends the N service requirements to the SF.

The mapping relationship indicates a correspondence between at least one sensing area and at least one service requirement. The service requirement request is used to request to obtain the target service requirement.

Based on this technical solution, after receiving the service requirement that is from the sensing function network element and that is used to request to obtain the target service requirement, the data management network element may use the sensing area as an input to determine the service requirement corresponding to the sensing area from the at least one service requirement included in the mapping relationship, and send the obtained service requirement to the sensing function network element, so that the sensing function network element obtains the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

According to a sixth aspect, this application provides a communication method, applied to a system including a sensing function network element, and the method includes: The sensing function network element receives a sensing request, where the sensing request is used to request sensing in a sensing area; and the sensing function network element determines a target service requirement based on the sensing area, where the target service requirement is determined based on the sensing area, and the target service requirement is used to determine a sensing KPI.

Based on this technical solution, after receiving the sensing request used to request sensing in the sensing area, the sensing function network element may use the sensing area as an input to obtain the target service requirement corresponding to the sensing area. In other words, after receiving different sensing requests used to request sensing in different sensing areas, the sensing function network element may enable flexible responses to the sensing requests based on the sensing areas, thereby meeting service requirement constraints for different sensing areas, and resolving an issue in which all service requirements are the same when sensing is performed in different sensing areas for the same service requirement.

According to a seventh aspect, this application provides a communication method, applied to a system including a data management network element, a network exposure function network element, and a sensing function network element, and the method includes: The NEF sends a sensing authorization request to the data management network element, where the sensing authorization request is used to request authorization of a sensing request from an AF, and the sensing request is used to request sensing in a sensing area; when determining to authorize the sensing request, the data management network element determines N service requirements based on the sensing area and a mapping relationship, where the mapping relationship indicates a correspondence between at least one sensing area and at least one service requirement; the data management network element sends the N service requirements to the network capability exposure function network element; the network exposure function network element sends a sensing request to the sensing function network element, where the sensing request carries the N service requirements; and the sensing function network element determines a target service requirement from the N service requirements, where the target service requirement is used to determine a KPI.

Based on this technical solution, after receiving the service requirement that is from the sensing function network element and that is used to request to obtain the target service requirement, the data management network element may use the sensing area as an input to determine the service requirement corresponding to the sensing area from the at least one service requirement included in the mapping relationship, and send the obtained service requirement to the sensing function network element, so that the sensing function network element obtains the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

According to an eighth aspect, this application provides a communication apparatus, including modules or units configured to implement the method according to any one of the first aspect to the fourth aspect and the possible implementations of the first aspect to the fourth aspect. It should be understood that each module or unit may implement a corresponding function by executing a computer program.

According to a ninth aspect, this application provides a communication apparatus, including a processor. The processor is configured to perform the method according to any one of the first aspect to the fourth aspect and the possible implementations of the first aspect to the fourth aspect.

The apparatus may further include a memory, configured to store a computer program and/or a configuration file of a logic circuit. The memory is coupled to the processor, and when executing the instructions stored in the memory, the processor may implement the method described in the foregoing aspects.

The apparatus may further include a communication interface. The communication interface is used by the apparatus to communicate with another device. For example, the communication interface may be a transceiver, a circuit, a bus, a module, or another type of communication interface.

According to a tenth aspect, this application provides a chip system. The chip system includes at least one processor, configured to support implementation of a function in any one of the first aspect to the fourth aspect and the possible implementations of the first aspect to the fourth aspect, for example, receiving or processing of data and/or information in the foregoing method.

In a possible design, the chip system further includes a memory, the memory is configured to store program instructions and data, and the memory is located inside or outside the processor.

The chip system may include a chip, or may include a chip and another discrete component.

In a possible design, the chip system further includes an interface circuit and/or a power supply circuit, the interface circuit is configured to perform data transmission, and the power supply circuit is configured to supply power to the chip system.

According to an eleventh aspect, this application provides a computer-readable storage medium, including a computer program. When the computer program is run on a computer, the computer is caused to implement the method according to any one of the first aspect to the fourth aspect and the possible implementations of the first aspect to the fourth aspect.

According to a twelfth aspect, this application provides a computer program product. The computer program product includes a computer program (also referred to as code or instructions). When the computer program is run, a computer is caused to perform the method according to any one of the first aspect to the fourth aspect and the possible implementations of the first aspect to the fourth aspect.

According to a thirteenth aspect, this application provides a communication system, including the foregoing sensing function network element and the foregoing data management network element.

Optionally, the communication system may be configured to implement the method according to any one of the fifth aspect and the possible implementations of the fifth aspect.

It should be understood that the technical solutions of the eighth aspect to the thirteenth aspect of this application correspond to the technical solutions of the first aspect to the fourth aspect of this application, and beneficial effects achieved by the aspects and corresponding feasible implementations are similar. Details are not described again.

### BRIEF DESCRIPTION OF DRAWINGS

FIG. 1 is a diagram of a converged architecture of a communication system according to an embodiment of this application;
FIG. 2 is a diagram of an independent architecture of a communication system according to an embodiment of this application;
FIG. 3 is a diagram of a network architecture of a service-based architecture (serving based architecture, SBA) according to an embodiment of this application;
FIG. 4 is a diagram of performing a sensing operation by a base station;
FIG. 5 is a diagram of parameters that affect sensing precision and sensing resolution;
FIG. 6 to FIG. 9 are schematic flowcharts of communication methods according to embodiments of this application; and
FIG. 10 and FIG. 11 are block diagrams of communication apparatuses according to embodiments of this application.

### DESCRIPTION OF EMBODIMENTS

The following describes technical solutions of this application with reference to accompanying drawings.

For ease of understanding of embodiments of this application, the following descriptions are first provided.

First, in embodiments of this application, prefix words such as "first" and "second" are merely used for distinguishing and describing different things belonging to the same name category, and are not intended to limit a sequence, sizes, or a quantity of things. For example, a "first mapping relationship" and a "second mapping relationship" are merely different mapping relationships, and there is no time sequence relationship, a magnitude relationship, or a priority relationship between the two relationships.

Second, "sending" and "receiving" in embodiments of this application indicate signal transfer directions. For example, "sending a sensing authorization request to a unified data management (unified data management, UDM)" may be understood as that a destination end of the sensing authorization request is the UDM, and may include indirect sending of the sensing authorization request to the UDM by another unit or module; and "receiving a sensing authorization request from a network exposure function (network exposure function, NEF)" may be understood as that a source end of the sensing authorization request is the NEF, and may include indirect receiving of the sensing authorization request from another unit or module. "Sending" may alternatively be understood as "outputting" of a chip interface, and "receiving" may alternatively be understood as "inputting" of the chip interface.

In other words, sending and receiving may be performed between devices, for example, between the NEF and the UDM; or may be performed in a device. For example, sending or receiving is performed between components, modules, chips, software modules, or hardware modules in the device through a bus, a cable, or an interface.

It may be understood that, before the information is sent from the source end to the destination end, necessary processing such as encoding and modulation may be performed. After receiving the information from the source end, the destination end may also perform corresponding processing such as decoding and demodulation, to interpret valid information from the source end. Similar descriptions in this application may be understood similarly, and details are not described again.

Third, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application.

It may be understood that, for a transmitter of the indication information, the indication information may indicate the to-be-indicated information, and for a receiver of the indication information, the indication information may be used to determine the to-be-indicated information.

Fifth, tables in embodiments of this application are merely examples. Values of information in the tables are merely examples, and other values may be configured. This is not limited in this application. The tables do not constitute a limitation on the protection scope of this application. For example, appropriate transformation or adjustment, such as splitting or combination, may be performed based on the foregoing tables. For another example, names of parameters shown in titles of the tables may alternatively be other names that can be understood by communication apparatuses, and values or representation manners of the parameters may alternatively be other values or representation manners that can be understood by the communication apparatuses. For still another example, during implementation of the foregoing tables, another data structure, such as an array, a queue, a container, a stack, a linear table, a pointer, a linked list, a tree, a graph, a structure, a class, a pile, or a hash table, may alternatively be used.

Sixth, in embodiments of this application, descriptions such as "when...", "in a case of...", "assuming that", and "if" all mean that a device (for example, a sensing function (sensing function, SF) or a UDM) performs corresponding processing in an objective case, are not intended to limit time, do not require a device (for example, the SF or the UDM) to necessarily perform a determining action during implementation, and do not mean another limitation.

Seventh, predefinition in this application may be understood as definition, predefinition, storage, pre-storage, pre-negotiation, pre-configuration, solidifying, or pre-burning.

The technical solutions provided in this application may be applied to various communication systems, such as a long term evolution (long term evolution, LTE) system, an LTE frequency division duplex (frequency division duplex, FDD) system, LTE time division duplex (time division duplex, TDD), a sidelink (sidelink, SL) communication system, a worldwide interoperability for microwave access (worldwide interoperability for microwave access, WiMAX) communication system, a 5th generation (5th generation, 5G) mobile communication system or a new radio access technology (new radio access technology, NR), and a satellite communication system. The 5G mobile communication system may include non-standalone (non-standalone, NSA) networking and/or standalone (standalone, SA) networking.

The technical solutions provided in this application may be further applied to a future communication system, for example, a 6th generation (6th generation, 6G) mobile communication system. This is not limited in this application.

For ease of understanding, a network architecture applicable to the method provided in embodiments of this application is first described in more detail with reference to the accompanying drawings.

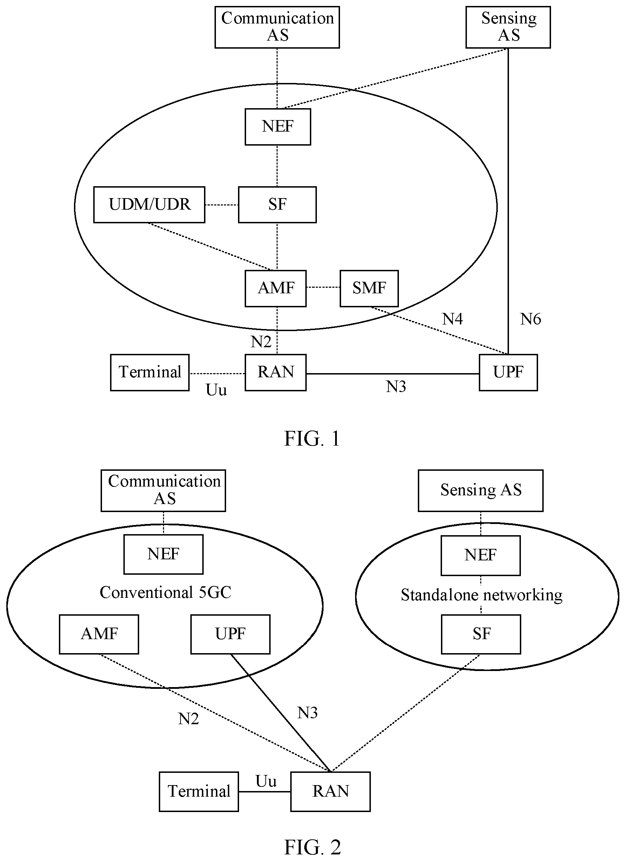

FIG. 1 and FIG. 2 respectively show two possible architectures in a 5G network: a converged architecture (referring to FIG. 1) and an independent architecture (referring to FIG. 2). A difference between the converged architecture and the independent architecture lies in a deployment location of an SF dedicated for a sensing service.

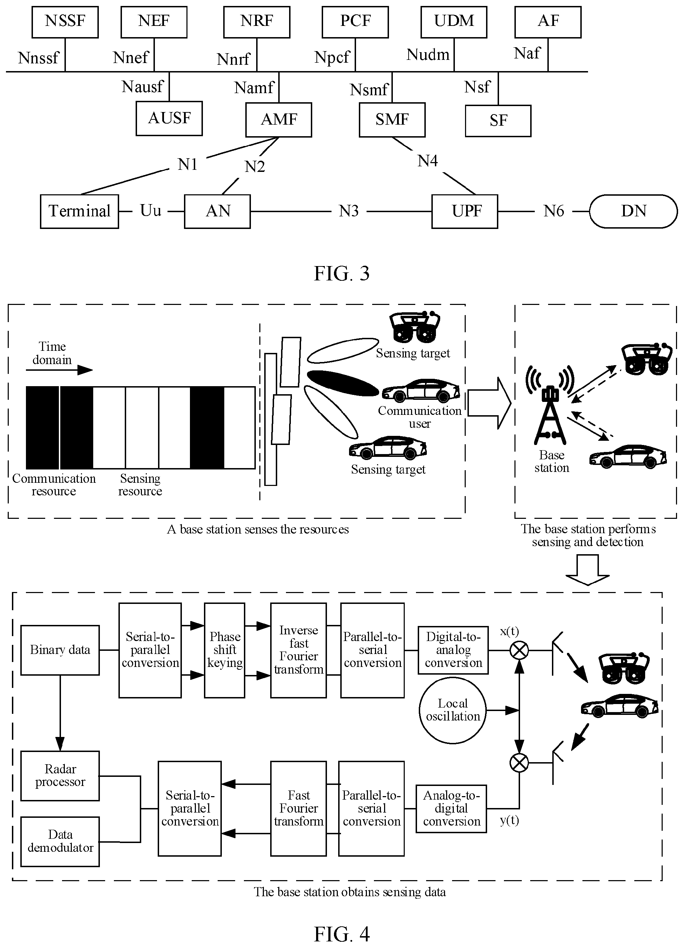

As shown in FIG. 1, in the converged architecture, the SF may be deployed in a conventional 5G core network (5G core network, 5GC), and is connected to another network element through an SBA interface. For more detailed descriptions of an SBA, refer to FIG. 3. Details are not described herein. The SF is connected to an NEF, and may interact with a server outside the 5GC through the NEF, for example, receive a sensing request message from the external server. The SF may be further connected to a user plane function (user plane function, UPF). A radio access network (radio access network, RAN) device like a base station may send received sensing data to the SF for processing through a user plane.

As shown in FIG. 2, in the independent architecture, the SF may be deployed outside a conventional 5GC, and the SF cannot be connected to another network element through an SBA interface, and may need to interact with another 5GC network element through an NEF. The SF may also be connected to the NEF, to interact with an external server via the NEF, or the SF may directly interact with an external server without the NEF. In addition, the SF may be connected to a RAN device, to interact with a terminal device.

It should be understood that the two possible architectures respectively shown in FIG. 1 and FIG. 2 are merely examples of a 5GC architecture, and should not constitute any limitation on this application. The method provided in this application is not limited to being used in the two architectures shown in FIG. 1 and FIG. 2.

FIG. 3 is a diagram of a network architecture of an SBA in a 5G network according to an embodiment of this application. As shown in FIG. 3, the 5G network architecture may include three parts: a terminal, a data network (data network, DN), and an operator network.

The following briefly describes network elements in FIG. 1 to FIG. 3.

The terminal may also be referred to as user equipment (user equipment, UE), an access terminal, a subscriber unit, a subscriber station, a mobile station, a remote station, a remote terminal, a mobile device, a user terminal, a terminal device, a wireless communication device, a user agent, or a user apparatus.

The terminal is a device that has a wireless transceiver function. The terminal may communicate with one or more core network (core network, CN) devices (or referred to as core devices) via an access network device (or referred to as an access device) in a radio access network. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

The terminal may also be a terminal in an internet of things (internet of things, IoT) system, or may be referred to as an IoT node. IoT is an important part in future development of information technologies. A main technical feature of the IoT is to connect things to a network by using a communication technology, to implement an intelligent network for human-machine interconnection and thing-thing interconnection. The connection may be implemented by using a broadband technology or a narrowband (narrowband, NB) technology. An IoT technology can implement massive connections, deep coverage, and terminal power saving by using, for example, the narrowband technology.

In embodiments of this application, an apparatus configured to implement a function of the terminal may be a terminal, or may be an apparatus that can support the terminal in implementing the function, for example, a chip system. The apparatus may be mounted in the terminal or used together with the terminal. In embodiments of this application, the chip system may include a chip, or may include a chip and another discrete component. In embodiments of this application, an example in which the apparatus configured to implement the function of the terminal is the terminal is merely used for description, and constitutes no limitation on the solutions in embodiments of this application.

The terminal in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

An operator network may include one or more of the following network elements: a network slice selection function (network slice selection function, NSSF) network element, an NEF network element, a network repository function (network repository function, NRF), a policy control function (policy control function, PCF), a UDM network element, an application function (application function, AF) network element, an authentication server function (authentication server function, AUSF) network element, an access and mobility management function (access and mobility management function, AMF) network element, a session management function module (session management function, SMF) network element, a UPF network element, an SF network element, an access network (access network, AN) (for example, a RAN network element), and the like. In the foregoing operator network, a part other than the RAN network element may be referred to as a core network part. For ease of description, the word "network element" is omitted below. For example, the AF network element is referred to as an AF for short, the UDM network element is referred to as a UDM for short, and the SF network element is referred to as an SF for short.

The RAN is a network including a plurality of RAN nodes, and implements a radio physical layer function, a resource scheduling function, a radio resource management function, a radio access control function, and a mobility management function. A 5G-RAN may be connected to a user plane function (user plane function, UPF) through a user plane interface N3, to transmit data of the terminal device. The 5G-RAN establishes a control plane signaling connection to an access and mobility management function (access and mobility management function, AMF) through a control plane interface N2, to implement functions such as radio access bearer control.

The RAN node may provide a wireless communication function service, and connect a terminal to a wireless network. The RAN node may also be referred to as a RAN device, an access network device, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, or a base station in a future mobile communication system. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in the same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open access network (open RAN, O-RAN, or ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, the apparatus configured to implement a function of the RAN node may be the RAN node, or may be an apparatus that can support the RAN node in implementing the function, for example, a chip system, a hardware circuit, a software module, or a combination of a hardware circuit and a software module. The apparatus may be mounted in the RAN node, or may be used together with the RAN node. In embodiments of this application, an example in which the apparatus configured to implement the function of the RAN node is the RAN node is merely used for description, and constitutes no limitation on the solutions in embodiments of this application.

The RAN node in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

The SF is mainly responsible for processing related to a sensing service, for example, determining a sensing result based on obtained sensing data, for example, whether there is an intrusion, or calculating a distance, a direction, and a location of a reflective object in a sensing area.

The AMF is mainly responsible for functions such as terminal authentication, terminal mobility management (mobility management, MM), network slice selection, and SMF selection. The AMF serves as an anchor for connecting N1 signaling and N2 signaling, provides routing of N1/N2 session management (session management, SM) messages for the SMF, and maintains and manages status information of the terminal.

The SMF is mainly responsible for all control plane functions of terminal session management, including UPF selection, internet protocol (internet protocol, IP) address allocation, quality of service (quality of service, QoS) management of a session, PCC (policy and charging control) policy obtaining (from a PCF), and the like.

The UPF, serving as an anchor point of a protocol data unit (protocol data unit, PDU) session connection, is responsible for data packet filtering, data transmission/forwarding, rate control, charging information generation, and the like for the terminal.

The UDR is mainly configured to store subscriber data, including subscription data invoked by the UDM, policy information invoked by the PCF, structured data used for capability exposure, application data invoked by the NEF, and the like.

The UDM is mainly configured to manage and control user data, for example, subscription information management, including obtaining subscription information from the UDR and providing the subscription information to another network element (for example, the AMF); generating a 3GPP authentication credential for a terminal; and registering and maintaining a network element currently serving the terminal (for example, an AMF represented by an AMF ID 1 is a current serving AMF of the terminal, that is, a serving AMF).

The NEF is configured to connect another internal network element of the core network to interact with an application function (application function, AF) network element corresponding to an external application server (application server, AS) of the core network, so as to provide network exposure capability for the AF, or provide information provided by the AF for the core network element.

The AUSF has an authentication server function, and is used to perform security authentication on a terminal when the terminal accesses a network.

The PCF mainly performs policy control on a quality of service (quality of service, QoS) policy, a charging (charging) policy, and the like, provides configuration policy information for a terminal, and provides policy information for a control plane network element (for example, the AMF or the SMF) of a network to manage and control the terminal.

The AF mainly transfers requirements of an application side on a network side, and may be considered as an application server or an agent of the application server. The AF may interact with a core network element to provide some services, for example, interact with the PCF to perform service policy control, interact with the NEF to obtain some network capability information or provide some application information for a network, and provide some data network access point information for the PCF to generate routing information of a corresponding data service.

The DN is mainly configured to provide services for users.

Network elements communicate with each other through interfaces. For example, an interface between the terminal and the AMF is an N1 interface, an interface between the AN and the AMF is an N2 interface, an interface between the AN and the UPF is an N3 interface, an interface between the SMF and the UPF is an N4 interface, and an interface between the UPF and the DN is an N6 interface. Some network elements may communicate with each other through a service-based interface. Nnssf, Nnef, Nnrf, Npcf, Nudm, Naf, Nausf, Namf, Nsmf, and Nsf in FIG. 1 are service-based interfaces. The interface Nsf is merely a possible name, and a name of a service-based interface corresponding to the SF is not limited in this application.

The foregoing network elements in the core network and the interfaces between the network elements are merely examples for description, and shall not constitute any limitation on this application. In addition, the network elements shown in the figure may be understood as network elements configured to implement different functions in the core network, for example, may be combined into a network slice as required. These core network elements may be independent devices, or may be integrated into the same device to implement different functions. Specific forms of the foregoing network elements are not limited in this application.

It may be understood that a network element used in a future communication system may be the foregoing network element, or may be a network element with another name having the same or similar function. This is not limited in this application.

In embodiments of this application, the apparatus configured to implement the functions of the core network may be a core network element corresponding to each function, or may be an apparatus that can support a core network element in implementing each function, for example, a chip system, a hardware circuit, a software module, or a combination of a hardware circuit and a software module. The apparatus may be mounted in the core network element, or may be used together with the core network element. In embodiments of this application, an example in which the apparatus configured to implement the core network function is the core network element is merely used for description, and constitutes no limitation on the solutions in embodiments of this application

The core network element in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

Currently, some base stations or terminals in the RAN may be used as sensing nodes because they have sensing capability brought by electromagnetic waves. Implementation of sensing is similar to the principle of radar. To be specific, a transmitter (that is, a sensing node) transmits an electromagnetic wave, and the electromagnetic wave is obtained by a receiver after being reflected by an object that needs to be sensed. The receiver (that is, a sensing node) may further process an obtained reflected signal (which may be referred to as original sensing data) to obtain sensing data, where the sensing data may be used to obtain a sensing result.

For example, when the base station is used as a sensing node, the base station has functions shown in Table A and FIG. 4. Table A is an example of sensing capability of a speed measurement radar, a surveillance radar, and an imaging radar.

**Table A**

| Sensing capability | Specification parameter | Distance resolution | Angular resolution | Sensing usage |
|---|---|---|---|---|
| Speed measurement radar | 1 transmit (transmit, T) 1 receive (receive, R) (1T1R) and 20 MHz (mega hertz, MHz) bandwidth | 7.5 m | Not applicable (not applicable, N/A) | Speed measurement and photographing triggering |
| Surveillance radar | 2T8R and 200 MHz bandwidth | 0.75 m | 6 degrees | Target check, per-lane counting, and coarse-grained classification of moving targets (accuracy: 70%) |
| Imaging radar | 12T16R and 1 GHz (gigahertz, GHz) bandwidth | 0.15 m | 2 degrees | Fine-grained classification of moving targets (accuracy: 100%) and three-dimensional point cloud imaging |

FIG. 4 is a diagram of performing a sensing operation by a base station. FIG. 4 shows an example of integrated sensing and communication (integrated sensing and communication, ISAC). The base station shown in FIG. 4 may multiplex an electromagnetic wave signal of a communication system for sensing. As shown in FIG. 4, resources used by the base station for communication and sensing may be time-division multiplexed (as shown in FIG. 4) or space-division multiplexed. The base station may perform sensing and detection by using the electromagnetic wave signal, and may also receive a signal that is transmitted back (which may be referred to as a reflected signal or an echo signal for short) after reaching an obstacle (that is, a detected target object), to obtain sensing data based on the echo signal. As shown in FIG. 4, the base station may perform serial-to-parallel conversion, phase shift keying, inverse fast Fourier transform (inverse fast Fourier transform, IFFT), parallel-to-serial conversion, digital-to-analog conversion, and the like on a to-be-sent signal, and the base station may also perform analog-to-digital conversion, parallel-to-serial conversion, fast Fourier transform (fast Fourier transform), serial-to-parallel conversion, demodulation, and the like on a received echo signal. The to-be-sent signal may be further sent to a radar processor, so that the radar processor obtains the sensing data based on the to-be-sent signal and the received echo signal (it may be understood that the echo signal herein is an echo signal obtained through the foregoing processing). It should be understood that processing performed by the base station shown in FIG. 4 on the to-be-sent signal and the received echo signal is merely an example, and should not constitute any limitation on this application.

The sensing node in the communication system may perform sensing and identification on specified areas, specified objects, or specified events, to meet sensing requirements in a plurality of aspects such as autonomous driving, security supervision, family healthcare, and meteorological monitoring. Specific examples are provided as follows.

### 1. Autonomous driving

In a V2X scenario and an uncrewed aerial vehicle (unmanned aerial vehicle, VAU) scenario, for example, because a vehicle or an uncrewed aerial vehicle has a short sensing distance or fails to sense in a non-line of sight (non-line of sight, NLOS) path, a dynamic map may be generated based on sensing data; for another example, during travel of a vehicle or an uncrewed aerial vehicle, there may be traffic hazard events such as a sudden appearance of a pedestrian, a non-motor vehicle, or the like, or a pedestrian, a non-motor vehicle, or the like in a blind zone of a field of view, so that the hazard events may be identified based on sensing data, and the vehicle or the uncrewed aerial vehicle is notified to perform an emergency operation; and for another example, in autonomous driving assistance of a vehicle or an uncrewed aerial vehicle, a customized high-precision dynamic map is generated based on sensing data, to assist the vehicle or the uncrewed aerial vehicle in autonomous driving.

### 2. Security supervision

In a V2X scenario and an uncrewed aerial vehicle scenario, violations by vehicles or uncrewed aerial vehicles, such as vehicles occupying emergency lanes or uncrewed aerial vehicles deviating from flight paths, can be identified based on sensing data, and real-time alarms can be generated.

In a perimeter security scenario, events such as foreign objects entering railway tracks or uncrewed aerial vehicles entering no-fly zones (for example, airports) can be detected based on sensing data, and the violation objects can be tracked and subjected to real-time emergency handling.

### 3. Family healthcare

For example, abnormal postures such as a fall can be identified based on sensing data, and an alarm can be generated in a timely manner. For another example, physiological parameters such as human body breathing or heartbeat can be obtained based on sensing data, so that once an abnormality is identified, an alarm can be generated in a timely manner.

### 4. Meteorological monitoring

An environment, climate, weather changes, and the like can be sensed and predicted.

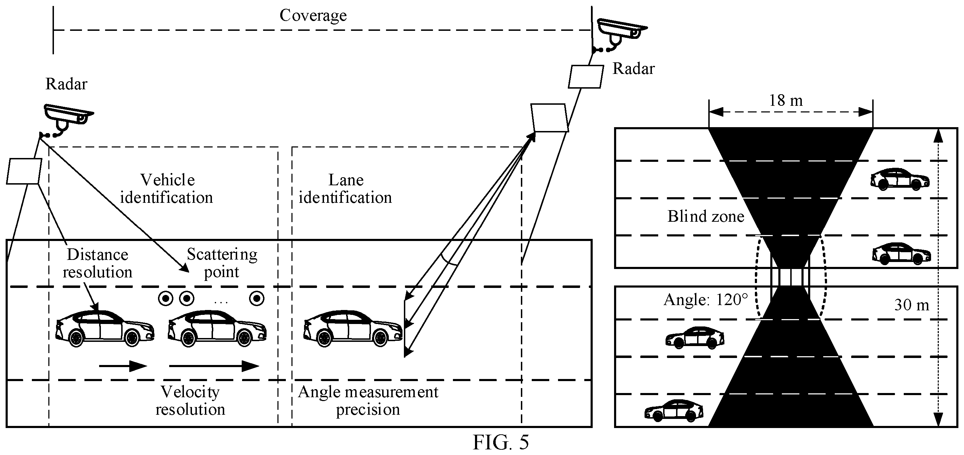

FIG. 5 is a diagram of parameters that affect sensing precision and sensing resolution. In FIG. 5, an internet of vehicles scenario is used as an example, to show several parameters in a sensing key performance indicators (key performance indicator, KPI) that affect sensing: sensing positioning precision (including vertical and horizontal precision), sensing velocity precision (including vertical and horizontal precision), sensing resolution (including spatial and velocity resolution).
1. Distance resolution α: is capability of distinguishing between adjacent targets in terms of distance, is usually measured by using a minimum recognizable distance interval, and can identify different vehicles.
2. Velocity resolution β: is capability of distinguishing between targets in terms of radial velocity.
3. Angle measurement precision θ: is capability of a radar to distinguish between adjacent targets in terms of angle, and is usually measured by using a minimum recognizable angle.
4. Horizontal field of view (field of view, FOV): is 120°, and for a bidirectional roadway with a width of 30 m, a bidirectional blind zone range is less than 18 m, and a blind zone area ratio is less than 1%.

A sensing node in 5G may be a RAN and a terminal. A plurality of sensing modes may be obtained based on combinations of different sensing nodes. According to a role of the sensing node: a transmitter or a receiver and a type of the sensing node: the RAN or the terminal in a sensing procedure, six sensing modes shown in Table 1 may be obtained below.

**Table 1**

| | Receiver: RAN 1 | Receiver: RAN 2 | Receiver: terminal 1 | Receiver: terminal 2 |
|---|---|---|---|---|
| Transmitter: RAN 1 | The RAN 1 performs self-sending and self-receiving | The RAN 1 performs sending and the RAN 2 performs receiving | The RAN performs sending and the terminal performs receiving | |
| Transmitter: terminal 1 | The terminal performs sending and the RAN performs receiving | | The terminal 1 performs self-sending and self-receiving | The terminal 1 performs sending and the terminal 2 performs receiving |

The six sensing modes shown in Table 1 are respectively distinguished for a transmitter and a receiver of a sensing signal, and are specifically as follows: A RAN node performs self-sending and self-receiving; a RAN node A performs sending and a RAN node B performs receiving; a RAN node performs sending and a terminal performs receiving; a terminal performs sending and a RAN node performs receiving; a terminal performs self-sending and self-receiving; and a terminal A performs sending and a terminal B performs receiving. It can be learned that the transmitter may be a terminal or a RAN node, and the receiver may be a terminal or a RAN node.

To better understand the method provided in embodiments of this application, the following briefly describes terms in this application.
1. Sensing key performance indicator (key performance indicator, KPI): The 3rd generation partnership project (3rd generation partnership project, 3GPP) technical specification (technical specification, TS) 22.173 defines the following parameters for the sensing KPI: a confidence interval, sensing positioning precision (including vertical and horizontal precision), sensing velocity precision (including vertical and horizontal precision), sensing resolution (including spatial and velocity resolution), a maximum sensing service delay, a refresh rate, and the like. These parameters may be used to describe precision required for obtaining sensing data.

Certainly, these parameters are merely examples of the sensing KPI, and a parameter specifically included in the sensing KPI is not limited in this application.

In an existing sensing procedure, an AF/application server (application server, AS) of a sensing application may send a sensing request message to an NEF, and the sensing request carries a service type, a service requirement, and external area information, to request a network to perform sensing based on the sensing request information and feed back a corresponding sensing result. The AF/AS of the sensing application or a terminal that bears the sensing application may alternatively directly send a sensing request message to a network element that is responsible for a sensing function in a communication network. The service requirement in the sensing request is proposed by the sensing application to the network to describe a requirement of the sensing application on precision of the sensing result.

In an existing sensing procedure, the sensing application may pose the same service requirement for the same service type in all areas. However, in an actual sensing scenario, there may be different sensing precision limitations for different sensing areas. For example, for a residential area, precision needs to be reduced to protect personal privacy, while for detection of an uncrewed aerial vehicle intrusion in an open environment, precision needs to be improved to exclude false positives caused by objects such as a bird. That is, different sensing areas may correspond to different service requirements. Therefore, if sensing is still performed in a sensing area according to the existing sensing procedure, service requirement constraints for different sensing areas may not be met.

In view of this, embodiments of this application provide a communication method and a related apparatus and system. In the method, when a network side receives a sensing request from a sensing application, a service requirement corresponding to a sensing area is determined based on the sensing area carried in the sensing request, and a prestored correspondence that is between a sensing area and a service requirement and that is on the network side, to meet sensing precision limitations for different areas.

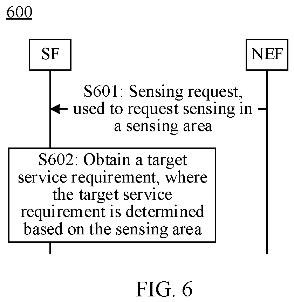

The following describes in detail the method provided in embodiments of this application with reference to FIG. 6 to FIG. 9. The method provided in embodiments of this application may be applied to the network architecture shown in FIG. 1 or FIG. 2, but embodiments of this application are not limited thereto.

FIG. 6 is a schematic flowchart of a communication method 600 according to an embodiment of this application. As shown in FIG. 6, the method 600 may include S601 and S602. The following describes the steps in the method 600 in detail.

S601: An NEF sends a sensing request to an SF, where the sensing request is used to request sensing in a sensing area. Correspondingly, the SF receives the sensing request from the NEF.

Alternatively, in S601, an AF sends a sensing request to an SF. Correspondingly, the SF receives the sensing request from the terminal. In this case, the AF does not send the sensing request to the SF via the NEF.

Alternatively, in S601, a terminal sends a sensing request to an SF. Correspondingly, the SF receives the sensing request from the terminal.

The sensing request indicates the sensing area. The sensing area is used to describe an area in which sensing needs to be performed, and the sensing area may be described by using an identifier, in a communication system or outside the communication system, of the area in which sensing is to be performed. The sensing area may include one or more of the following: coordinate information, a geographical area identifier, address information, a tracking area identity (tracking area identifier, TAI), and a cell identity (cell identifier, cell ID). It should be noted that the sensing area may be other information. This is not limited in this application. For ease of description, the sensing request from the NEF is referred to as a sensing request #1, and the sensing area indicated by the sensing request #1 is referred to as a sensing area #1 below. That is, the sensing request #1 is used to request sensing in the sensing area #1. The sensing request from the AF is referred to as a sensing request #2, and a sensing area indicated by the sensing request #2 is referred to as a sensing area #2. That is, the sensing request #2 is used to request sensing in the sensing area #2.

The sensing area #1 is an identifier of the sensing area in the communication system, and the sensing area #2 is an identifier of the sensing area outside the communication system. Because the AF does not know the identifier of the sensing area in the communication system, the identifier of the sensing area indicated by the AF is the identifier of the sensing area outside the communication system, so as to distinguish the sensing area from the identifier of the sensing area in the communication system.

Optionally, the sensing request received by the SF may further carry at least one of the following: an identifier of the AF, a requested service type (for ease of description, referred to as a service type #1 for short below), or a requested service requirement (for ease of description, referred to as a service requirement #1 for short below).

The identifier of the AF may be an AF ID or other information that can identify the AF.

The service type #1 is information about a sensing service type (for example, intrusion detection or traffic flow monitoring) corresponding to the sensing request.

The service type #1 may be one or more of at least one predefined service type. The at least one service type may include, for example, but is not limited to, detection of an uncrewed aerial vehicle intrusion, autonomous driving, security supervision, family healthcare, and meteorological monitoring. This application includes but is not limited to what is described herein.

The service type #1 indicates one or more of the at least one predefined service type, and the requested service requirement may be used to describe a requirement for a requested sensing result. For example, the requested service requirement includes one or more of the following: sensing positioning precision, sensing velocity precision, sensing resolution, and duration required for sensing. The service requirement may be used to determine a KPI corresponding to the sensing result requested by the sensing request.

S602: The SF obtains a target service requirement, where the target service requirement is determined based on the sensing area.

The target service requirement is used to determine a sensing KPI.

The target service requirement may be the KPI, or may include information used to determine the KPI. If the target service requirement includes the information used to determine the KPI, the SF may convert the target service requirement into the KPI. In other words, a possible implementation in which the SF determines, based on the target service requirement, the KPI for sensing in the sensing area is determining the target service requirement as a KPI for sensing the terminal, and another possible implementation is converting the target service requirement into a KPI for sensing in the sensing area.

Optionally, that the SF obtains the target service requirement may include: The SF obtains the target service requirement based on the sensing area; or a UDM obtains the target service requirement based on the sensing area, and then returns the target service requirement to the SF.

For example, the sensing area is a residential area. When sensing is performed in the residential area, it is desirable to protect privacy of users in the residential area. Therefore, the target service requirement may be determined as a service requirement with low sensing precision. In this manner of determining the target service requirement with reference to the sensing area, exposure of user privacy can be effectively avoided, leakage of sensitive information can be reduced, and network exposure capability can be effectively and flexibly provided.

For example, that the SF obtains the target service requirement based on the sensing area includes: The SF obtains the target service requirement based on the sensing area and a first mapping relationship. That the UDM obtains the target service requirement based on the sensing area includes: The UDM obtains the target service requirement based on the sensing area and a first mapping relationship. Because a specific manner in which the SF obtains the target service requirement is described in detail below, details are not described herein.

The first mapping relationship in this application indicates that at least one sensing area corresponds to at least one service requirement. It should be understood that each of the at least one sensing area may correspond to one service requirement; or the at least one sensing area includes one specific sensing area, and the specific sensing area corresponds to a plurality of service requirements.

It should be understood that service requirements corresponding to different sensing areas may be the same or may be different.

The at least one service requirement may include a default service requirement, where the default service requirement may be a predefined service requirement; the default service requirement indicates to determine the requested service requirement carried in the sensing request as the target service requirement; or the default service requirement is defined as the service requirement requested by the sensing request, and the default service requirement is not preconfigured.

**Table 2**

| Sensing area | Service requirement |
|---|---|
| Location 1 | Default service requirement |
| Location 2 | Minimum service requirement |
| Location 3 | Medium service requirement |

Table 2 shows an example of the first mapping relationship. The location 1, the location 2, and the location 3 shown in Table 2 represent three different sensing areas, and the first mapping relationship is used to represent service requirements corresponding to three locations of the same service type. A level of the default service requirement is higher than a level of the medium service requirement, and the level of the medium service requirement is higher than a level of the minimum service requirement. For example, sensing positioning precision in an indicator corresponding to the minimum service requirement is 1 m, sensing positioning precision in an indicator corresponding to the medium service requirement is 1 cm, and sensing positioning precision in an indicator corresponding to the default service requirement is 1 mm. Because the precision of 1 m, 1 cm, and 1 mm increases in ascending order, it may be considered that the level of the default service requirement is higher than the level of the medium service requirement, and the level of the medium service requirement is higher than the level of the minimum service requirement. For another example, sensing resolution in the indicator corresponding to the minimum service requirement is 1 m, sensing resolution in the indicator corresponding to the medium service requirement is 1 cm, and sensing resolution in the indicator corresponding to the default service requirement is 1 mm. Because the precision of 1 m, 1 cm, and 1 mm increases in ascending order, it may be considered that the level of the default service requirement is higher than the level of the medium service requirement, and the level of the medium service requirement is higher than the level of the minimum service requirement. For another example, a sensing service delay in the indicator corresponding to the minimum service requirement is 1s, a sensing service delay in the indicator corresponding to the medium service requirement is 1 ms, and a sensing service delay in the indicator corresponding to the default service requirement is 0.1 ms. Because the precision of 1s, 1 ms, and 0.1 ms increases in ascending order, it may be considered that the level of the default service requirement is higher than the level of the medium service requirement, and the level of the medium service requirement is higher than the level of the minimum service requirement.

In this embodiment of this application, after receiving the sensing request used to request sensing in the sensing area, the SF may use the sensing area as an input to obtain the target service requirement corresponding to the sensing area. In other words, after receiving different sensing requests used to request sensing in different sensing areas, the SF may enable flexible responses to the sensing requests based on the sensing areas, thereby meeting service requirement constraints for different sensing areas, and resolving an issue in which all service requirements are the same when sensing is performed in different sensing areas for the same service requirement.

Optionally, before S601, the method 600 further includes: The NEF sends a sensing authorization request to the UDM, where the sensing authorization request is used to request authorization of the sensing request from the AF (for ease of description, the sensing request from the AF is referred to as the sensing request #2 below), and the sensing request #2 is used to request sensing in the sensing area #2 (for example, a specific location or a geographical range); the UDM receives the sensing authorization request from the NEF, and determines whether to authorize the sensing request #2; and when determining to perform authorization, the UDM sends an authorization message to the NEF, where the authorization message is used to authorize the sensing request; or when determining not to perform authorization, the UDM sends an authorization rejection message to the NEF, where the authorization rejection message is used to reject authorization of the sensing request.

It should be noted that the NEF may continue to perform S601 when the UDM determines to authorize the sensing request.

The sensing authorization request indicates the sensing area #1, and the sensing request #2 indicates the sensing area #2. It should be understood that a geographical location corresponding to the sensing area indicated by the sensing request #1 is the same as that corresponding to the sensing area indicated by the sensing request #2, but a form of the geographical location indicated by the sensing request #1 is a form that can be identified by an operator network.

For example, the sensing authorization request carries the identifier of the AF. That the UDM determines whether to authorize the sensing request may include: determining, based on the identifier of the AF, whether to authorize the sensing request.

For example, if the AF identified by the identifier of the AF belongs to a predefined range of AFs that are allowed to be authorized, the UDM may determine to authorize the sensing request; or if the AF identified by the identifier of the AF does not belong to a predefined range of AFs that are allowed to be authorized, the UDM determines not to authorize the sensing request.

Optionally, the sensing authorization request further carries the service requirement #1, and the method 600 further includes: The UDM determines whether the service requirement #1 meets a service requirement corresponding to the sensing area #1 included in the first mapping relationship, and determines to authorize the sensing request when the service requirement corresponding to the sensing area #1 included in the first mapping relationship is met, or determines to reject the sensing request when the service requirement corresponding to the sensing area #1 included in the first mapping relationship is not met.

That the service requirement #1 meets the service requirement corresponding to the sensing area #1 included in the first mapping relationship means that a level of the service requirement #1 is not higher than a level of a first-type service requirement, and the first-type service requirement is the service requirement corresponding to the sensing area #1 included in the first mapping relationship.

The following shows several examples in which the level of the first-type service requirement is higher than the level of the requested service requirement #1: 1. Sensing positioning precision in an indicator corresponding to the first-type service requirement is 1 mm, and sensing positioning precision in an indicator corresponding to the service requirement #1 is 1 m. Because the precision of 1 mm is higher than the precision of 1 m, it may be considered that the level of the first-type service requirement is higher than the level of the service requirement #1. 2. Sensing resolution in the indicator corresponding to the first-type service requirement is 1 m, and sensing resolution in the indicator corresponding to the service requirement #1 is 5 m. Because the sensing resolution of 1 m has higher precision than the sensing resolution of 5 m, it may be considered that the level of the first-type service requirement is higher than the level of the service requirement #1. 3. A maximum sensing service delay in the indicator corresponding to the first-type service requirement is 0.2 ms, and a maximum sensing service delay in the indicator corresponding to the service requirement #1 is 0.5 ms. Because the delay of 0.2 ms is shorter than the delay of 0.5 ms, it may be considered that the level of the first-type service requirement is higher than the level of the service requirement #1.

Optionally, before the NEF sends the sensing authorization request to the UDM, the method 600 further includes: The AF sends the sensing request #2 to the NEF, where the sensing request #2 is used to request sensing in the sensing area #2, and the sensing request #2 indicates the sensing area #2; and the NEF receives the sensing request #2, and determines the sensing area #2 as the sensing area #1.

For descriptions of the sensing area #2 and the sensing area #1, refer to the foregoing related descriptions. Details are not described herein again.

Optionally, that the SF obtains the target service requirement in S602 may include the following three implementations.

**First possible implementation:** The SF determines N service requirements based on the sensing area #1 and the first mapping relationship, and obtains the target service requirement from the N service requirements, where N is a positive integer.

Optionally, when N>1, that the SF obtains the target service requirement from the N service requirements includes: The SF obtains the target service requirement from the N service requirements based on a quantity of terminals included in the sensing area #1 or time information of the sensing request.

For example, time indicated by the time information of the sensing request is in morning peak hours or evening peak hours, for example, 7:00 to 9:00 or 17:00 to 19:00. If a traffic flow of cars on a road is detected, to avoid detecting buses, the target service requirement may be determined as a service requirement with high sensing precision.

For another example, a larger quantity of terminals included in the sensing area indicates higher processing complexity of a sensing node, and therefore, a low-level service requirement may be used for sensing in the sensing area; and a smaller quantity of terminals included in the sensing area indicates a lower requirement on processing capability of the sensing node when sensing is performed in the sensing area, and therefore, a high-level service requirement may be used for sensing in the sensing area.

The time information of the sensing request in this application may indicate one or more of the following: time at which the AF initiates the sensing request #2, time at which the SF receives the sensing request #1, time at which the UDM receives the sensing authorization request, and time at which sensing is requested to be performed and that is carried in the sensing request.

For example, when N>1, that the SF obtains the target service requirement from the N service requirements based on the quantity of terminals included in the sensing area #1 includes: The SF obtains the target service requirement from the N service requirements based on a correspondence between the N service requirements and N ranges of the quantity of terminals, and the quantity of terminals included in the sensing area #1.

For example, when N>1, that the SF obtains the target service requirement from the N service requirements based on the time information of the sensing request includes: The SF obtains the target service requirement from the N service requirements based on a correspondence between the N service requirements and N time periods, and the time information of the sensing request. For example, the quantity of terminals included in the sensing area #1 in this embodiment of this application may be obtained from an AMF.

**Table 3**

| Quantity of terminals | Service requirement |
|---|---|
| ≤5 | Default service requirement |
| 6 to 15 | Medium service requirement |
| 16 to 50 | Minimum service requirement |
| >50 | Reject |

Table 3 shows the correspondence between the N service requirements and the N ranges of the quantity of terminals when N=4. For example, Table 3 shows the service requirements, of a specific service type, corresponding to the four ranges of a quantity of terminals in a specific sensing area.

**Table 4**

| Time period | Service requirement |
|---|---|
| 5:00 to 7:00 | Default service requirement |
| Another time period | Minimum service requirement |

Table 4 shows the correspondence between the N service requirements and the N time periods when N=2. For example, Table 4 shows the service requirements, of a specific service type, corresponding to the two time periods in a specific sensing area.

Optionally, when N>1, that the SF obtains the target service requirement from the N service requirements includes: The SF obtains the target service requirement from the N service requirements based on the quantity of terminals included in the sensing area #1 and the time information of the sensing request.

For example, the time indicated by the time information of the sensing request is in the morning peak hours or the evening peak hours, for example, 7:00 to 9:00 or 17:00 to 19:00. Because there are a large quantity of terminals in subways in the morning peak hours or the evening peak hours, sensing with high sensing precision may cause leakage of privacy or sensitive information. Therefore, the target service requirement may be determined as a service requirement with low sensing precision. In this manner of determining the target service requirement with reference to the sensing area, the sensing request time, and the quantity of terminals included in the sensing area, exposure of user privacy can be effectively avoided, leakage of sensitive information can be reduced, and network exposure capability can be effectively and flexibly provided.

For example, when N>1, that the SF obtains the target service requirement from the N service requirements based on the quantity of terminals included in the sensing area #1 and the time information of the sensing request includes: The SF determines M (M is an integer greater than 0 and less than N) service requirements from the N service requirements based on a second mapping relationship and the time information of the sensing request; and the SF obtains the target service requirement from the M service requirements based on a correspondence between the M service requirements and M ranges of a quantity of terminals, and the quantity of terminals included in the sensing area #1.

For example, when N>1, that the SF obtains the target service requirement from the N service requirements based on the quantity of terminals included in the sensing area #1 and the time information of the sensing request includes: The SF determines the M service requirements from the N service requirements based on a third mapping relationship and the quantity of terminals included in the sensing area #1; and the SF obtains the target service requirement from the M service requirements based on a correspondence between the M service requirements and M time periods, and the time information of the sensing request.

The second mapping relationship indicates that at least one time period corresponds to at least one service requirement, and the third mapping relationship indicates that at least one range of a quantity of terminals corresponds to at least one service requirement.

It may be understood that when a first time period in the at least one time period corresponds to a plurality of service requirements, the SF may determine the plurality of service requirements from the N service requirements based on the second mapping relationship and the time information of the sensing request, where the first time period is a time period to which the time information of the sensing request belongs.

Similarly, when a first range in the at least one range of a quantity of terminals corresponds to a plurality of service requirements, the SF may determine the plurality of service requirements from the N service requirements based on the third mapping relationship and the quantity of terminals included in the sensing area #1, where the first range is a range to which the quantity of terminals included in the sensing area #1 belongs.

**Table 5**

| Time period | Quantity of terminals | Service requirement |
|---|---|---|
| Another time period | ≤5 | Default service requirement |
| | 6 to 15 | Medium service requirement |
| 5:00 to 7:00 | 16 to 50 | Minimum service requirement |
| | >50 | Reject |

Table 5 shows an example of the second mapping relationship. For example, Table 5 shows the service requirements, of a specific service type, corresponding to the time periods and the ranges of a quantity of terminals in a specific sensing area.

**Table 6**

| Quantity of terminals | Time period | Service requirement |
|---|---|---|
| ≤5 | 5:00 to 7:00 | Default service requirement |
| 6 to 15 | 5:00 to 7:00 | Medium service requirement |
| | Another time period | Minimum service requirement |
| 16 to 50 | Another time period | Reject |

Table 6 shows an example of the third mapping relationship. For example, Table 6 shows the service requirements, of a specific service type, corresponding to the ranges of a quantity of terminals in a specific sensing area and the time periods.

For example, when N>1, that the SF obtains the target service requirement from the N service requirements based on the quantity of terminals included in the sensing area #1 and the time information of the sensing request includes: The SF obtains the target service requirement from the N service requirements based on a fourth mapping relationship, the time information of the sensing request, and the quantity of terminals included in the sensing area #1, where the fourth mapping relationship indicates a correspondence among at least one time period, at least one range of a quantity of terminals, and at least one service requirement.

For an example of the fourth mapping relationship, refer to Table 5 and Table 6. A difference lies in that the SF directly obtains the target service requirement from the N service requirements based on both the time information of the sensing request and the quantity of terminals included in the sensing area #1, instead of obtaining the target service requirement from the M service requirements after sifting out the M service requirements from the N service requirements.

Optionally, when the sensing request #1 carries the service type #1, before S602, the method 600 further includes: The SF determines at least one sensing area based on the service type #1, and determines the sensing area #1 from the at least one sensing area.

For example, that the SF determines the at least one sensing area based on the service type #1 includes: The SF determines the at least one sensing area based on the service type #1 and a fifth mapping relationship, where the fifth mapping relationship indicates that the at least one service type corresponds to the at least one sensing area.

It may be understood that the sensing area corresponding to the service type #1 included in the fifth mapping relationship includes the sensing area #1.

**Table 7**

| Service type | Sensing area |
|---|---|
| Target check | Location 1 |
| | Location 2 |
| Traffic flow detection | Location 1 |
| | Location 3 |

Table 7 shows the fifth mapping relationship. The fifth mapping relationship shown in Table 7 includes two service types, and each service type corresponds to two sensing areas.

**Second possible implementation:** The SF sends a service requirement request to the UDM, where the service requirement request is used to request to obtain the target service requirement, and the service requirement request indicates the sensing area #1; the UDM receives the service requirement request, and determines N service requirements based on the sensing area #1 indicated by the service requirement request; the UDM sends the N service requirements to the SF; and the SF receives the N service requirements, and obtains the target service requirement from the N service requirements.

For example, that the UDM determines the N service requirements based on the sensing area #1 indicated by the service requirement request includes: The UDM determines the N service requirements based on the sensing area #1 indicated by the service requirement request and the first mapping relationship.

For descriptions of the first mapping relationship, refer to the descriptions in the first possible implementation. Details are not described herein again.

When N=1, that the UDM determines the N service requirements based on the sensing area #1 and the first mapping relationship includes: The UDM determines P (which is a positive integer) service requirements based on the sensing area #1 indicated by the service requirement request and the first mapping relationship. Further, when P>1, the method 600 may further include: The UDM determines the N service requirements from the P service requirements based on time information of the service requirement request.

Optionally, that the UDM determines the N service requirements from the P service requirements based on the time information of the service requirement request includes: The UDM determines the N service requirements from the P service requirements based on a correspondence between the P service requirements and P time periods, and the time information of the service requirement request.

When N=1, that the UDM determines the N service requirements based on the sensing area #1 and the first mapping relationship includes: The UDM determines the N service requirements based on the sensing area #1 indicated by the service requirement request, time information of the service requirement request, a quantity of terminals included in the sensing area #1, and a fourth mapping relationship, where the fourth mapping relationship includes the first mapping relationship.

For example, the quantity of terminals included in the sensing area #1 may be obtained by the UDM from an AMF, or may be obtained locally.

When N>1, that the UDM determines the N service requirements based on the sensing area #1 and the first mapping relationship may include: The UDM determines P (which is a positive integer) service requirements based on the sensing area #1 indicated by the service requirement request and the first mapping relationship. Further, when P>1, the method 600 may further include: The UDM determines the N service requirements from the P service requirements based on time information of the service requirement request.

Optionally, that the UDM determines the N service requirements from the P service requirements based on the time information of the service requirement request includes: The UDM determines the N service requirements from the P service requirements based on the foregoing second mapping relationship (or the foregoing third mapping relationship) and the time information of the service requirement request.

The time information of the service requirement request may be time at which the UDM receives the service requirement request, or may be the foregoing time information of the sensing request.

Optionally, when N>1, the method 600 further includes: The UDM sends, to the SF, a correspondence between the N service requirements and N ranges of a quantity of terminals. Correspondingly, the SF receives the correspondence from the UDM, and obtains the target service requirement from the N service requirements based on the correspondence between the N service requirements and the N ranges of the quantity of terminals, and the quantity of terminals included in the sensing area #1.

Similar to the first possible implementation, the service requirement request carries the service type #1. Before the UDM determines the N service requirements based on the sensing area #1 indicated by the service requirement request and the first mapping relationship, the method 600 further includes: The UDM determines at least one sensing area based on the service type #1, and determines the sensing area #1 from the at least one sensing area.

For example, that the UDM determines the at least one sensing area based on the service type #1 includes: The UDM determines the at least one sensing area based on the service type #1 and a fifth mapping relationship, and determines the sensing area #1 from the at least one sensing area.

**Third possible implementation:** The sensing request received by the SF carries N service requirements, and the SF determines the target service requirement from the N service requirements.

Optionally, the sensing authorization request indicates the sensing area #1; and the method 600 further includes: The UDM determines the N service requirements based on the sensing area #1 that is from the NEF; the UDM sends the N service requirements to the NEF; and the NEF receives the N service requirements, and performs S601.

For example, that the UDM determines the N service requirements based on the sensing area #1 that is from the NEF includes: The UDM determines the N service requirements based on the sensing area #1 that is from the NEF and the first mapping relationship.

For descriptions of determining, by the UDM, the N service requirements based on the sensing area #1 and the first mapping relationship, refer to the related descriptions in the second possible implementation. Details are not described herein again.

Optionally, when N>1, the method 600 further includes: When determining to perform authorization, the UDM sends, to the NEF, a correspondence between the N service requirements and N ranges of a quantity of terminals.

It may be understood that when the NEF receives, from the UDM, the correspondence between the N service requirements and the N ranges of the quantity of terminals, the NEF may further include, in the sent sensing request #1, the correspondence between the N service requirements and the N ranges of the quantity of terminals. In this case, the SF may obtain the target service requirement from the N service requirements based on the received correspondence between the N service requirements and the N ranges of the quantity of terminals, and a quantity of terminals included in the sensing area #1.

The quantity of terminals included in the sensing area #1 may be obtained from an AMF. The quantity of terminals included in the sensing area #1 may alternatively be sent by the UDM to the SF via the NEF. For example, when the UDM determines to authorize the sensing request, the UDM obtains the quantity of terminals included in the sensing area #1 and sends the quantity to the NEF, and the NEF sends the quantity of terminals included in the sensing area #1 to the SF through the sensing request.

Similar to the first possible implementation, the sensing authorization request further carries the service type #1, before the UDM determines the N service requirements based on the sensing area #1 that is from the NEF and the first mapping relationship, the method 600 further includes: The UDM determines at least one sensing area based on the service type #1, and determines the sensing area #1 from the at least one sensing area.

For example, that the UDM determines the at least one sensing area based on the service type #1 includes: The UDM determines the at least one sensing area based on the service type #1 and a fifth mapping relationship.

It should be noted that the process in which the UDM determines the N service requirements based on the sensing area #1 that is from the NEF and the first mapping relationship may be performed when the UDM determines to authorize the sensing request. In this case, the N service requirements sent by the UDM to the NEF may be carried in the authorization message.

For the first to the third possible implementations, when N=1, the N service requirements are the target service requirement.

Optionally, before the SF obtains the target service requirement from the N service requirements based on the correspondence between the N service requirements and the N ranges of the quantity of terminals, and the quantity of terminals included in the sensing area, the method 600 further includes: The SF sends an obtaining request to the AMF, where the obtaining request is used to request to obtain the quantity of terminals included in the sensing area; the AMF receives the obtaining request, and sends an obtaining response to the SF, where the obtaining response indicates the quantity of terminals included in the sensing area; and the SF receives the obtaining response, and determines, based on the obtaining response, the quantity of terminals included in the sensing area.

For example, the obtaining response includes the quantity of terminals, or the obtaining response includes a terminal list. It should be understood that, when the obtaining response includes the terminal list, the SF may collect statistics on the quantity of terminals based on the terminal list.

It may be understood that the AMF is determined by the SF based on the sensing area #1.

Optionally, before S602, the method 600 further includes: The SF determines whether sensing is allowed in the sensing area #1.

It should be noted that, when the SF determines that sensing is allowed in the sensing area #1, the SF may continue to perform S602.

Example 1: The SF determines that sensing is allowed in the sensing area #1 when at least one of the following conditions is met; or the SF determines that sensing is allowed in the sensing area #1 when all the following conditions are not met: The sensing area #1 belongs to a predefined area range, the service type #1 is a predefined service type allowed to be triggered, sensing precision corresponding to the service requirement #1 belongs to a predefined sensing precision range, the sensing request time belongs to a predefined time interval, or the AF identified by the identifier of the AF is a predefined AF allowed to be triggered.

It may be understood that the at least one condition may be a local policy, in the SF, configured by an operator.

It may be understood that an indication of the sensing area #1, the service type #1, the service requirement #1, and the identifier of the AF may be sent to the SF through the sensing request #1. The sensing precision corresponding to the service requirement #1 belongs to the predefined sensing precision range. For example, any one or more parameters included in the KPI determined based on the service requirement #1 may belong to a predefined range of any one or more sensing precision items.

For example, when the sensing request #1 carries the four parameters, and when the SF determines that sensing is allowed in the sensing area #1, if there is one parameter that can meet the foregoing corresponding condition, the SF may determine that sensing is allowed in the sensing area. It should be noted that whether a parameter other than the parameter that meets the foregoing condition meets the foregoing condition is not concerned in this application.

The predefined area range is described by using area information used by the operator. For example, the predefined area range may be an area through which an important figure or a vehicle fleet passes.

The predefined service type allowed to be triggered may be described by using an ID of a service. For example, the predefined service type allowed to be triggered may be sensing departure time and return time of a user within a residential area, or the like.

The predefined sensing precision range may be divided by using a precision value. For example, sensing is allowed in the sensing area #1 if the precision value is greater than 1, and sensing is not allowed in the sensing area #1 if the precision value is less than or equal to 1.

The foregoing predefined time interval may be, for example, a peak time period of human flow. It should be noted herein that, detection of peak hours on a highway may be independently triggered in a time dimension, that is, the detection may be triggered provided that the time information of the sensing request belongs to the predefined time interval, while detection of peak hours at a traffic intersection may be triggered in combination with another condition.

The foregoing predefined AF allowed to be triggered may be, for example, an AF 1 and an AF 2, and a predefined AF that is not allowed to be triggered may be, for example, a public safety (public safety) AF or an authoritative/regulatory authority AF.

Optionally, before S602, the method 600 further includes: The SF obtains the target service requirement when at least one of the following conditions is met: The sensing area #1 belongs to the predefined area range, the service type #1 is the predefined service type allowed to be triggered, the sensing precision corresponding to the service requirement #1 belongs to the predefined sensing precision range, the sensing request time belongs to the predefined time interval, or the application function network element identified by the identifier of the application function network element is the predefined application function network element allowed to be triggered.

For descriptions of the at least one condition, refer to the foregoing related descriptions. Details are not described herein again.

Optionally, the sensing request #1 carries the requested service requirement; and after S602, to be specific, after the SF obtains the target service requirement, the method 600 further includes: The SF sends a service requirement confirmation request to the AF, where the service requirement confirmation request is used to request to use the target service requirement, and the target service requirement is different from the service requirement #1; and the AF sends a service requirement confirmation reply to the SF, where the service requirement confirmation reply indicates consent or non-consent to using the target service requirement.

The SF may include the target service requirement in the service requirement confirmation request, where the service requirement request indicates, to the AF, a service requirement that is different from the service requirement #1 and is used to perform a sensing procedure, to request the AF to confirm whether the target service requirement can be used for sensing.

For example, when the service requirement confirmation reply indicates consent to using the target service requirement, the SF initiates the sensing procedure based on the target service requirement; or when the service requirement confirmation reply indicates non-consent to using the target service requirement, the SF determines not to perform sensing.

Optionally, when it is determined that sensing is not allowed, the SF sends a rejection message to the AF, where the rejection message is used to reject the sensing request #1.

Optionally, when it is determined that sensing is allowed and the target service requirement is the sensing KPI, the SF may initiate the sensing procedure based on the target service requirement; or when it is determined that sensing is allowed and the target service requirement is not the sensing KPI, the SF may determine a sensing KPI based on the target service requirement, and initiate the sensing procedure based on the KPI.

The target service requirement may be the KPI, or may include the KPI, or may include information used to determine the KPI, for example, an identifier or a parameter corresponding to the KPI, or the like. The KPI is used to describe precision required for obtaining sensing data. For example, the KPI may include one or more of the following indicators: a confidence interval, sensing positioning precision (including vertical and horizontal precision), sensing velocity precision (including vertical and horizontal precision), sensing resolution (including spatial and velocity resolution), a maximum sensing service delay, and a refresh rate. These indicators are merely examples for the KPI, and indicators specifically included in the KPI are not limited in this application.

If the target service requirement is the KPI or includes the KPI, the SF may directly obtain, based on the target service requirement, the KPI for sensing a terminal, and initiate the sensing procedure for the terminal.

If the target service requirement includes the information used to determine the KPI, the SF may convert the target service requirement into the KPI. In other words, a possible implementation in which the SF determines, based on the target service requirement, the KPI for sensing the terminal is determining the target service requirement as the KPI for sensing the terminal, and another possible implementation is converting the target service requirement into the KPI for sensing the terminal.

In a possible implementation, the target service requirement may include an identifier corresponding to the KPI, and the SF may convert, based on the identifier in the target service requirement, the target service requirement into the KPI for sensing the terminal. In a possible implementation, a correspondence between at least one identifier and at least one KPI is prestored in the SF, and each KPI may include one or more indicators. The SF may find, from the prestored correspondence based on an identifier included in the target service requirement, a KPI corresponding to the identifier.

In another possible implementation, the target service requirement may alternatively include a parameter corresponding to the KPI, and the SF may convert, based on the parameter in the target service requirement, the target service requirement into the KPI for sensing the terminal. In a possible implementation, a correspondence between at least one group of parameters and at least one KPI is prestored in the SF, each group of parameters may include one or more parameters, and each KPI may include one or more indicators. The SF may find, from the prestored correspondence based on a group of parameters included in the target service requirement, a KPI corresponding to the group of parameters.

A conversion may be performed based on a predefined correspondence between a service requirement and a KPI. For example, the target service requirement is a specific identifier, and the SF has a predefined KPI corresponding to the specific identifier. Alternatively, a parameter in a sensing requirement may be translated into a parameter in a KPI. For example, parameters in the sensing requirement are in one-to-one correspondence with parameters in the KPI, and the SF determines the parameters in the sensing requirement as the corresponding KPI parameters. The sensing requirement may alternatively be equivalent to the KPI. That is, the SF does not need to perform translation.

It may be understood that the SF may use any one of the six sensing modes shown in Table 1 to initiate the sensing procedure.

For example, the SF initiates the sensing procedure, including: The SF selects a sensing mode, selects specific sensing nodes (a transmitter and a receiver), indicates the sensing nodes to send a sensing signal and receive a sensing signal by using the sensing KPI that is determined based on the target service requirement, to obtain sensing data, so as to determine a sensing result.

Optionally, before the SF sends the service requirement confirmation request to the AF, the method 600 further includes: The SF determines whether the target service requirement is the same as the service requirement #1.

For example, when the target service requirement is different from the service requirement #1, the SF sends the service requirement confirmation request to the AF; or when the target service requirement is the same as the service requirement #1, the SF initiates the sensing procedure based on the target service requirement.

It may be understood that that the target service requirement is different from the service requirement #1 means that a level of the target service requirement is different from a level of the service requirement #1. For example, the level of the target service requirement is lower than the level of the service requirement #1. For another example, the level of the target service requirement is higher than the level of the service requirement #1.

Example 1: The level of the target service requirement is lower than the level of the service requirement #1. In this case, the service requirement confirmation request may be understood as being used to request the AF to confirm whether the service requirement for sensing can be degraded, where the service requirement confirmation request may also be referred to as a degradation confirmation request. Specifically, before the SF sends the service requirement confirmation request to the AF, the method 600 further includes: The SF determines whether the target service requirement is degraded relative to the service requirement #1.

That the target service requirement is degraded relative to the service requirement #1 means that the level of the target service requirement is lower than the level of the service requirement #1.

For example, if the target service requirement obtained by the SF is a minimum service requirement, and the service requirement #1 is a medium service requirement, it may be considered that the target service requirement is degraded relative to the service requirement #1.

It should be noted that the level of the service requirement may be determined based on values of indicators in the KPI determined based on the service requirement. The following shows several examples in which the level of the target service requirement is lower than the level of the service requirement #1. For example, sensing positioning precision in an indicator corresponding to the target service requirement is 1 m, and sensing positioning precision in an indicator corresponding to the service requirement #1 is 1 mm. Because the precision of 1 mm is higher than the precision of 1 m, it may be considered that the level of the target service requirement is lower than the level of the service requirement #1. For another example, sensing resolution in the indicator corresponding to the target service requirement is 5 m, and sensing resolution in the indicator corresponding to the service requirement #1 is 1 m. Because the sensing resolution of 1 m has higher precision than the sensing resolution of 5 m, it may be considered that the level of the target service requirement is lower than the level of the service requirement #1. For another example, a maximum sensing service delay in the indicator corresponding to the target service requirement is 0.5 ms, and a maximum sensing service delay in the indicator corresponding to the service requirement #1 is 0.2 ms. Because the delay of 0.2 ms is shorter than the delay of 0.5 ms, it may be considered that the level of the target service requirement is lower than the level of the service requirement #1.

Example 2: The level of the target service requirement is higher than the level of the service requirement #1. In this case, the service requirement confirmation request may be understood as being used to request the AF to confirm whether the service requirement for sensing can be upgraded, where the service requirement confirmation request may also be referred to as an upgrade confirmation request. Specifically, before the SF sends the service requirement confirmation request to the AF, the method 600 further includes: The SF determines whether the target service requirement is upgraded relative to the service requirement #1.

That the target service requirement is upgraded relative to the service requirement #1 means that the level of the target service requirement is higher than the level of the service requirement #1.

For example, if the target service requirement obtained by the SF is a medium service requirement, and the service requirement #1 is a minimum service requirement, it may be considered that the target service requirement is upgraded relative to the service requirement #1.

The following shows several examples in which the level of the target service requirement is higher than the level of the service requirement #1. For example, sensing positioning precision in an indicator corresponding to the target service requirement is 1 mm, and sensing positioning precision in an indicator corresponding to the service requirement #1 is 1 m. Because the precision of 1 mm is higher than the precision of 1 m, it may be considered that the level of the target service requirement is higher than the level of the service requirement #1. For another example, sensing resolution in the indicator corresponding to the target service requirement is 1 m, and sensing resolution in the indicator corresponding to the service requirement #1 is 5 m. Because the sensing resolution of 1 m has higher precision than the sensing resolution of 5 m, it may be considered that the level of the target service requirement is higher than the level of the service requirement #1. For another example, a maximum sensing service delay in the indicator corresponding to the target service requirement is 0.2 ms, and a maximum sensing service delay in the indicator corresponding to the service requirement #1 is 0.5 ms. Because the delay of 0.2 ms is shorter than the delay of 0.5 ms, it may be considered that the level of the target service requirement is higher than the level of the service requirement #1.

For example, when the SF determines that there is the degradation or upgrade, the SF sends the service requirement confirmation request to the AF; or when the SF determines that there is no degradation, the SF initiates the sensing procedure based on the target service requirement.

Certainly, when the target service requirement is different from the service requirement #1, the SF may alternatively initiate the sensing procedure for the terminal based on the target service requirement, without confirming with the AF whether to accept the target service requirement, for example, when the level of the target service requirement is higher than the level of the service requirement #1, initiate the sensing procedure for the terminal based on the target service requirement, without confirming with the AF whether to accept the target service requirement. In this case, the SF does not need to determine whether the target service requirement is the same as the service requirement #1. In other words, that the SF sends the service requirement confirmation request to the AF is an optional step, and does not necessarily need to be performed.

Optionally, before S601, the method 600 further includes: The AF sends a parameter configuration request to the NEF, where the parameter configuration request includes a correspondence between at least one sensing area and at least one service requirement; the NEF performs an authorization check on the AF, and sends the parameter configuration request to the SF or the UDM, where the parameter configuration request includes the correspondence between the at least one sensing area and the at least one service requirement; and the SF or the UDM determines the first mapping relationship based on the parameter configuration request.

Optionally, the parameter configuration request may further include a correspondence between the at least one service requirement and at least one time period.

Optionally, the parameter configuration request may further include a correspondence between the at least one service requirement and at least one range of a quantity of terminals.

It may be understood that, for the first possible implementation, the NEF may send the parameter configuration request to the SF; and for the second possible implementation and the third possible implementation, the NEF may send the parameter configuration request to the UDM.

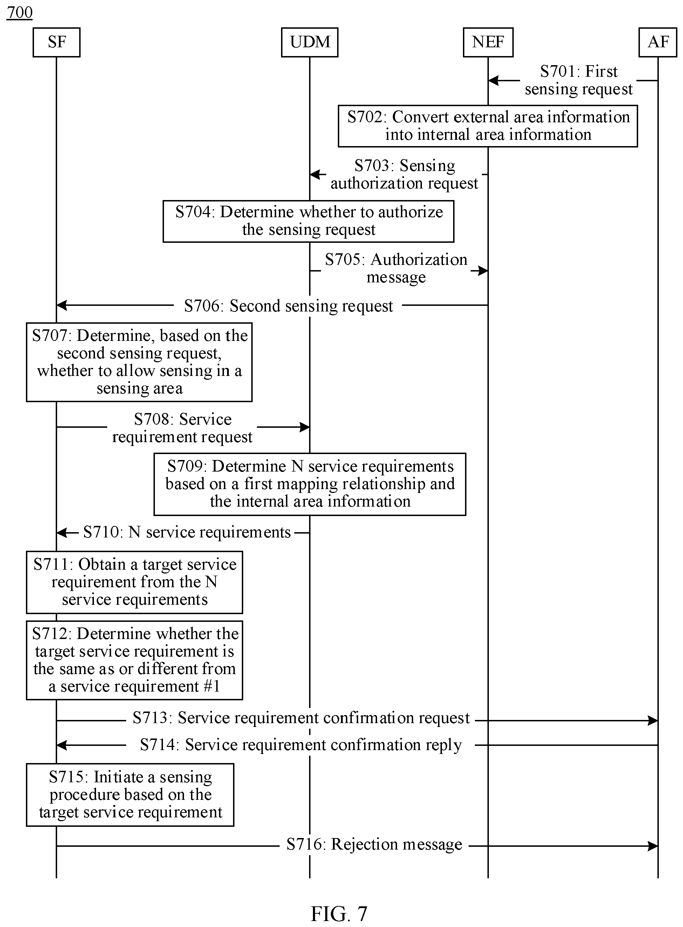

Based on the embodiment shown in FIG. 6, the following describes in more detail the communication method provided in embodiments of this application with reference to FIG. 7 to FIG. 9. It should be noted that, in embodiments shown in FIG. 7 to FIG. 9, for steps that are the same as or similar to those in the embodiment shown in FIG. 6, refer to the foregoing related descriptions with reference to the method 600. Details are not described again.

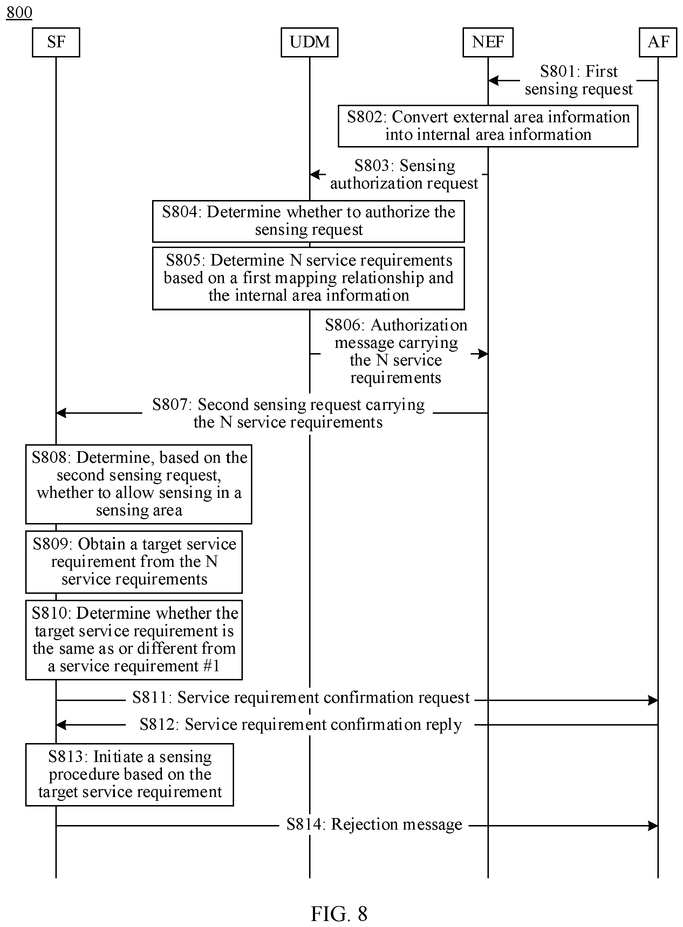

The following describes in detail the method provided in embodiments of this application with reference to FIG. 7 and FIG. 8 by using an example in which a UDM prestores a first mapping relationship.

FIG. 7 is another schematic flowchart of the communication method according to an embodiment of this application. As shown in FIG. 7, the method 700 may include S701 to S716. The following describes steps in the method 700.

S701: An AF sends a first sensing request to an NEF, where the first sensing request includes an identifier of the AF, a service type #1, a service requirement #1, and external sensing area information. Correspondingly, the NEF receives the first sensing request from the AF.

The external area information may be understood as the foregoing sensing area #2, and the first sensing request may be understood as the foregoing sensing request #2.

S702: The NEF converts the external sensing area information into internal sensing area information.

The internal sensing area information means area information used by an operator network, and may be understood as the foregoing sensing area #1.

S703: The NEF sends a sensing authorization request to a UDM. Correspondingly, the UDM receives the sensing authorization request from the NEF.

For descriptions of the sensing authorization request, refer to the foregoing related descriptions of the sensing authorization request. Details are not described herein again.

S704: The UDM determines whether to authorize the sensing request.

For example, the UDM may determine, based on the identifier of the AF, whether to authorize the sensing request from the AF. In another possible case, the UDM may further determine whether the service requirement carried in the sensing request from the AF meets a service requirement included in a correspondence prestored in the UDM, and determine to perform authorization if the service requirement is met, or determine not to perform authorization if the service requirement is not met.

The UDM sends an authorization rejection message to the NEF when determining not to perform authorization, where the authorization rejection message is used to reject authorization of the sensing request.

When the authorization succeeds, some steps in S705 to S716 continue to be performed.

S705: The UDM sends an authorization message to the NEF. Correspondingly, the NEF receives the authorization message from the UDM.

S706: The NEF sends a second sensing request to an SF, where the second sensing request includes the identifier of the AF, the service type #1, the service requirement #1, and the internal sensing area information. Correspondingly, the SF receives the second sensing request from the NEF.

The second sensing request may be understood as the foregoing sensing request #1.

S707: The SF determines, based on the second sensing request, whether to allow sensing in the sensing area.

When the SF determines that sensing is allowed in the sensing area #1, some steps in S708 to S716 continue to be performed; or when the SF determines that sensing is not allowed in the sensing area #1, the SF rejects the second sensing request. For descriptions of determining that sensing is allowed in the sensing area #1, refer to the foregoing related descriptions.

S708: The SF sends a service requirement request to the UDM. Correspondingly, the UDM receives the service requirement request from the SF.

The obtaining request includes the internal area information.

S709: The UDM determines N service requirements based on a first mapping relationship and the internal area information.

For this process, refer to the foregoing process in which the UDM determines the N service requirements based on the first mapping relationship and the sensing area #1. Details are not described herein again.

S710: The UDM sends the N service requirements to the SF. Correspondingly, the SF receives the N service requirements from the UDM.

Optionally, when N is greater than 1, the method 700 further includes: The UDM sends, to the SF, a correspondence between the N service requirements and N ranges of a quantity of terminals.

S711: The SF obtains a target service requirement from the N service requirements.

For this process, refer to the process of obtaining the target service requirement in the second possible implementation in the foregoing method 600. Details are not described herein again.

S712: The SF determines that the target service requirement is the same as or different from the service requirement #1.

If the target service requirement is the same as the service requirement #1, S715 is directly performed.

If the target service requirement is different from the service requirement #1, some steps in S713 to S716 continue to be performed.

S713: The SF sends a service requirement confirmation request to the AF. Correspondingly, the AF receives the service requirement confirmation request from the SF.

S714: The AF sends a service requirement confirmation reply to the SF. Correspondingly, the SF receives the service requirement confirmation reply from the AF.

If the confirmation reply indicates consent to using the target service requirement, S715 in which the SF initiates a sensing procedure based on the target service requirement continues to be performed.

If the confirmation reply indicates non-consent to using the target service requirement, S716 in which the SF sends a rejection message to the AF continues to be performed, where the rejection message is used to reject the sensing request #2. Correspondingly, the AF receives the rejection message from the SF.

For descriptions of the service requirement confirmation request and the service requirement confirmation reply, refer to the foregoing related descriptions.

In this embodiment of this application, after receiving the service requirement that is from the SF and that is used to request to obtain the target service requirement, the UDM may determine, based on the sensing area and the first mapping relationship, the service requirement corresponding to the sensing area, and send the obtained service requirement to the SF, so that the SF obtains the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

FIG. 8 is another schematic flowchart of the communication method according to an embodiment of this application. As shown in FIG. 8, the method 800 may include S801 to S814. The following describes steps in the method 800.

S801: An AF sends a first sensing request to an NEF. Correspondingly, the NEF receives the first sensing request from the AF.

The first sensing request may be understood as the foregoing sensing request #2.

S802: The NEF converts external sensing area information into internal sensing area information.

The internal sensing area information means area information used by an operator network.

The internal sensing area information may be understood as the foregoing sensing area #1, and the external area information may be understood as the foregoing sensing area #2.

S803: The NEF sends a sensing authorization request to a UDM. Correspondingly, the UDM receives the sensing authorization request from the NEF.

S804: The UDM determines whether to authorize the sensing request.

For descriptions of S801 to S804, refer to the foregoing descriptions of S701 to S704. Details are not described herein again.

The UDM sends an authorization rejection message to the NEF when determining not to perform authorization, where the authorization rejection message is used to reject authorization of the sensing request.

When the authorization succeeds, some steps in S805 to S815 continue to be performed.

S805: The UDM determines, based on a first mapping relationship and the internal area information, at least one new service requirement corresponding to the internal area information.

For this process, refer to S709 in the method 700. Details are not described herein again.

S806: The UDM sends an authorization message to the NEF, where the authorization message carries N service requirements. Correspondingly, the NEF receives the authorization message from the UDM.

Optionally, when N is greater than 1, the authorization message further carries a correspondence between the N service requirements and N ranges of a quantity of terminals.

S807: The NEF sends a second sensing request to an SF, where the second sensing request carries the N service requirements. Correspondingly, the SF receives the second sensing request from the NEF.

Optionally, when the authorization message further carries the correspondence between the N service requirements and the N ranges of the quantity of terminals, the second sensing request further carries the correspondence between the N service requirements and the N ranges of the quantity of terminals.

S808: The SF determines, based on the second sensing request, whether to allow sensing in the sensing area.

When the SF determines that sensing is allowed in the sensing area #1, some steps in S809 to S815 continue to be performed; or when the SF determines that sensing is not allowed in the sensing area #1, the SF rejects the second sensing request. For descriptions of determining that sensing is allowed in the sensing area #1, refer to the foregoing related descriptions.

S809: The SF obtains a target service requirement from the N service requirements.

For this process, refer to the process of obtaining the target service requirement in the third possible implementation in the method 600. Details are not described herein again.

S810: The SF determines that the target service requirement is the same as or different from the service requirement #1.

If the target service requirement is the same as the service requirement #1, S813 is directly performed.

If the target service requirement is different from the service requirement #1, some steps in S811 to S814 continue to be performed.

S811: The SF sends a service requirement confirmation request to the AF. Correspondingly, the AF receives the service requirement confirmation request from the SF.

S812: The AF sends a service requirement confirmation reply to the SF. Correspondingly, the SF receives the service requirement confirmation reply from the AF.

If the confirmation reply indicates consent to using the target service requirement, S813 in which the SF initiates a sensing procedure based on the target service requirement continues to be performed.

If the confirmation reply indicates non-consent to using the target service requirement, S814 in which the SF sends a rejection message to the AF continues to be performed, where the rejection message is used to reject the sensing request #2. Correspondingly, the AF receives the rejection message from the SF.

For descriptions of the service requirement confirmation request and the service requirement confirmation reply, refer to the foregoing related descriptions.

In this embodiment of this application, when the sensing request from the AF is authorized, the UDM may determine, based on the sensing area carried in the sensing authorization request and the first mapping relationship, the service requirement corresponding to the sensing area, and send the obtained service requirement to the NEF, so that the NEF sends the obtained service requirement to the SF, and the SF obtains the target service requirement corresponding to the sensing area from the received service requirement. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

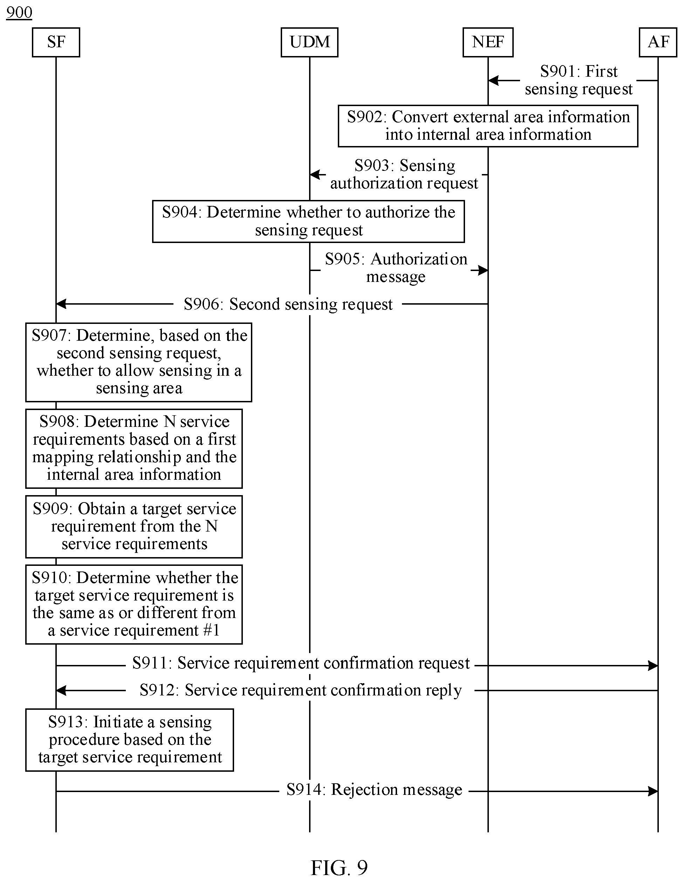

The following describes in detail the method provided in embodiments of this application with reference to FIG. 9 by using an example in which an SF prestores a first mapping relationship.

FIG. 9 is still another schematic flowchart of the communication method according to an embodiment of this application. As shown in FIG. 9, the method 900 may include S901 to S914. The following describes steps in the method 900.

S901: An AF sends a first sensing request to an NEF. Correspondingly, the NEF receives the sensing request from the AF.

S902: The NEF converts external sensing area information into internal sensing area information.

S903: The NEF sends a sensing authorization request to a UDM. Correspondingly, the UDM receives the sensing authorization request from the NEF.

S904: The UDM determines whether to authorize the sensing request.

The UDM sends an authorization rejection message to the NEF when determining not to perform authorization, where the authorization rejection message is used to reject authorization of the sensing request.

When the authorization succeeds, some steps in S905 to S914 continue to be performed.

S905: The UDM sends an authorization message to the NEF. Correspondingly, the NEF receives the authorization message from the UDM.

S906: The NEF sends a second sensing request to an SF. Correspondingly, the SF receives the second sensing request from the NEF.

S907: The SF determines, based on the second sensing request, whether to allow sensing in a sensing area.

For descriptions of S901 to S907, refer to the related descriptions of S701 to S707. Details are not described herein again.

When the SF determines that sensing is allowed in the sensing area #1, some steps in S908 to S914 continue to be performed; or when the SF determines that sensing is not allowed in the sensing area #1, the SF rejects the second sensing request. For descriptions of determining that sensing is allowed in the sensing area #1, refer to the foregoing related descriptions. S908: The SF determines N service requirements based on a first mapping relationship and the internal area information.

For this process, refer to the foregoing process in which the SF determines the N service requirements based on the first mapping relationship and the sensing area #1. Details are not described herein again.

S909: The SF obtains a target service requirement from the N service requirements.

For this process, refer to the process of obtaining the target service requirement in the first possible implementation in the foregoing method 600. Details are not described herein again.

S910: The SF determines that the target service requirement is the same as or different from a service requirement #1.

If the target service requirement is the same as the service requirement #1, S913 is directly performed.

If the target service requirement is different from the service requirement #1, some steps in S911 to S914 continue to be performed.

S911: The SF sends a service requirement confirmation request to the AF. Correspondingly, the AF receives the service requirement confirmation request from the SF.

S912: The AF sends a service requirement confirmation reply to the SF. Correspondingly, the SF receives the service requirement confirmation reply from the AF.

If the confirmation reply indicates consent to using the target service requirement, S913 in which the SF initiates a sensing procedure based on the target service requirement continues to be performed.

If the confirmation reply indicates non-consent to using the target service requirement, S914 in which the SF sends a rejection message to the AF continues to be performed, where the rejection message is used to reject the sensing request #2. Correspondingly, the AF receives the rejection message from the SF.

For descriptions of the service requirement confirmation request and the service requirement confirmation reply, refer to the foregoing related descriptions.

In this embodiment of this application, after receiving the sensing request used to request sensing in the sensing area, the SF may obtain, based on the sensing area and the first mapping relationship, the target service requirement corresponding to the sensing area. Therefore, the method provided in this embodiment of this application may enable flexible responses to the sensing request based on the sensing area, thereby meeting service requirement constraints for different sensing areas, and resolving an issue in which all service requirements are the same when sensing is performed in different sensing areas for the same service requirement.

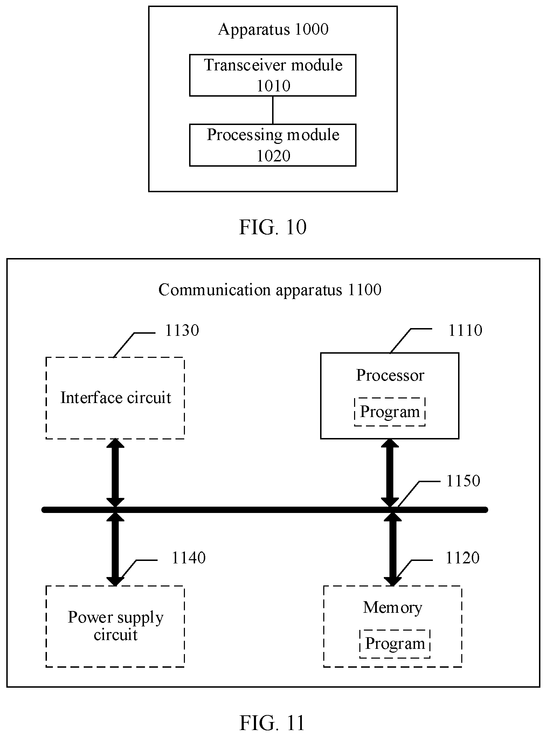

The foregoing describes in detail the method provided in embodiments of this application with reference to FIG. 6 to FIG. 9. The following describes in detail apparatuses provided in embodiments of this application with reference to FIG. 10 and FIG. 11.

FIG. 10 and FIG. 11 are diagrams of possible apparatuses according to embodiments of this application. The apparatuses may be configured to implement functions of the SF or the UDM in the foregoing method embodiments, and therefore can also achieve the beneficial effects in the foregoing method embodiments.

FIG. 10 is a block diagram of a communication apparatus according to an embodiment of this application. As shown in FIG. 10, the apparatus 1000 includes a transceiver module 1010 and a processing module 1020.

In a possible design, the apparatus 1000 is configured to implement functions of the SF in the method embodiments shown in FIG. 6 to FIG. 9.

For example, a transceiver module 1010 is configured to receive a sensing request, and a processing module 1020 is configured to obtain a target service requirement.

Optionally, the transceiver module 1010 is further configured to: send a service requirement request to a data management function network element; and receive N service requirements from the data management function network element, where N is a positive integer. The processing module 1020 is further configured to obtain the target service requirement from the N service requirements.

Optionally, the processing module 1020 is further configured to: determine the N service requirements based on a sensing area and a mapping relationship; and obtain the target service requirement from the N service requirements.

Optionally, the sensing request carries N service requirements, and the processing module 1020 is further configured to obtain the target service requirement from the N service requirements.

Optionally, the processing module 1020 is further configured to: when N>1, obtain the target service requirement from the N service requirements based on a correspondence between the N service requirements and N ranges of a quantity of terminals, and a quantity of terminals included in the sensing area.

Optionally, the transceiver module 1010 is further configured to obtain, from an access and mobility management function network element, the quantity of terminals included in the sensing area.

Optionally, the processing module 1020 is further configured to: when N>1, obtain the target service requirement from the N service requirements based on a correspondence between the N service requirements and N time periods, and time information of the sensing request.

Optionally, the processing module 1020 is further configured to determine that sensing is allowed in the sensing area.

Optionally, the processing module 1020 is further configured to determine that sensing is allowed in the sensing area when at least one of the following conditions is met: The sensing area belongs to a predefined area range, a service type is a predefined service type allowed to be triggered, a sensing KPI corresponding to a requested service requirement belongs to a predefined sensing KPI range, the time information of the sensing request belongs to a predefined time interval, or an application function network element identified by an identifier of the application function network element is a predefined application function network element allowed to be triggered.

Optionally, the processing module 1020 is further configured to obtain the target service requirement when it is determined that at least one of the following conditions is met: The sensing area belongs to a predefined area range, a service type is a predefined service type allowed to be triggered, a sensing KPI corresponding to a requested service requirement belongs to a predefined sensing KPI range, the time information of the sensing request belongs to a predefined time interval, or an application function network element identified by an identifier of the application function network element is a predefined application function network element allowed to be triggered.

Optionally, the transceiver module 1010 is further configured to: send a service requirement confirmation request to the application function network element; and receive a service requirement confirmation reply from the application function network element. The processing module 1020 is further configured to: when the service requirement confirmation reply indicates consent to using the target service requirement, initiate a sensing procedure based on the target service requirement; or when the service requirement confirmation reply indicates non-consent to using the target service requirement, determine that sensing is not allowed.

Optionally, the transceiver module 1010 is further configured to: when it is determined that sensing is not allowed, send a rejection message to the application function network element, where the rejection message is used to reject the sensing request.

For more detailed descriptions of the transceiver module 1010 and the processing module 1020, directly refer to the related descriptions in embodiments shown in FIG. 6 to FIG. 9. Details are not described herein again.

In another possible design, the apparatus 1000 is configured to implement functions of the UDM in the method 600 and the method embodiments shown in FIG. 7 to FIG. 9.

For example, a transceiver module 1010 is configured to receive a service requirement request from a sensing function network element; a processing module 1020 is configured to determine N service requirements based on a sensing area and a mapping relationship; and the transceiver module 1010 is further configured to send the N service requirements to the sensing function network element.

Optionally, the processing module 1020 is further configured to: determine at least one service requirement based on the sensing area and the mapping relationship; and determine the N service requirements from the at least one service requirement based on a correspondence between the at least one service requirement and at least one time period, and time information of the service requirement request.

Optionally, when N>1, the transceiver module 1010 is further configured to send, to the sensing function network element, a correspondence between the N service requirements and N ranges of a quantity of terminals.

Optionally, the transceiver module 1010 is further configured to receive a parameter configuration request; and the transceiver module 1010 is further configured to determine the mapping relationship based on the parameter configuration request.

For example, the transceiver module 1010 is configured to receive a sensing authorization request from a network capability exposure function network element; the processing module 1020 is configured to: when it is determined to authorize the sensing request, determine N service requirements based on a sensing area and a mapping relationship, where the mapping relationship indicates a correspondence between at least one sensing area and at least one service requirement; and the transceiver module 1010 is further configured to send the N service requirements to the network capability exposure function network element.

Optionally, when N>1, the transceiver module 1010 is further configured to send, to the network capability exposure function network element, a correspondence between the N service requirements and N ranges of a quantity of terminals.

Optionally, the processing module 1020 is further configured to determine, based on an identifier of an application function network element, whether to authorize the sensing request.

Optionally, the processing module 1020 is further configured to: when it is determined, based on the identifier of the application function network element, to authorize the sensing request, determine that a requested service requirement does not meet a service requirement corresponding to the sensing area included in the mapping relationship; and determine not to authorize the sensing request.

For more detailed descriptions of the transceiver module 1010 and the processing module 1020, directly refer to related descriptions in embodiments shown in FIG. 7 to FIG. 9 and the method 600. Details are not described herein again.

It should be noted that the apparatus 1000 may include a sending module but does not include a receiving module. Alternatively, the apparatus 1000 may include a receiving module but does not include a sending module. This may be specifically determined based on whether the foregoing solution performed by the apparatus 1000 includes a sending action and a receiving action. It may be understood that because the apparatus 1000 has a communication function, the apparatus 1000 may also be referred to as a communication apparatus.

FIG. 11 is another block diagram of a communication apparatus according to an embodiment of this application. As shown in FIG. 11, the communication apparatus 1100 includes at least one processor 1110. The at least one processor 1110 may be configured to execute a computer program or instructions in a memory, to implement the steps performed by the SF, the steps performed by the UDM, or the steps performed by the AF in the method 600 and any one of the method embodiments shown in FIG. 7 to FIG. 9.

Optionally, the communication apparatus 1100 may further include at least one memory 1120, configured to: store the instructions executed by the processor 1110, input data needed by the processor 1110 to run the instructions, or data generated after the processor 1110 runs the instructions. The at least one processor 1110 and the at least one memory 1120 may be separately disposed. For example, each memory may be connected to one or more processors, so that the connected processors can read information from the memory, and store and/or write information into the memory. Alternatively, the at least one processor 1110 and the at least one memory 1120 may be integrated together. For example, one processor may be integrated with one or more memories.

Optionally, the communication apparatus 1100 further includes an interface circuit 1130, which may be configured for data and/or signaling transmission. The at least one processor 1110 and the interface circuit 1130 are coupled to each other. It may be understood that the interface circuit 1130 may be a transceiver, an input/output circuit, a bus, a module, a pin, or another type of interface circuit. In the input/output circuit, an input circuit may be configured for receiving, and an output interface may be configured for sending.

Optionally, the communication apparatus 1100 further includes a power supply circuit 1140, and the power supply circuit 1140 may be configured to supply power to the communication apparatus 1100.

When the communication apparatus 1100 is used in the methods shown in the foregoing embodiments, the at least one processor 1110 is configured to perform a function of the processing unit, and the interface circuit 1130 is configured to perform a function of the receiving unit and/or a function of the sending unit. Whether the interface circuit 1130 is configured for sending or receiving may be specifically determined based on whether the interface circuit is configured to perform a sending action or a receiving action in the solution performed by the communication apparatus 1100.

It may be understood that when the communication apparatus 1100 is a communication device (for example, an SF, a UDM, or an AF), the interface circuit 1130 may be a transceiver, and may specifically include a transmitter and a receiver. The transmitter is configured to send a signal, and the receiver is configured to receive a signal. When the communication apparatus 1100 is a chip used in a communication device, the interface circuit 1130 may be an input/output circuit, a bus, a module, a pin, or another type of interface circuit. In the input/output circuit, an input circuit may be configured for receiving, and an output interface may be configured for sending.

It should be understood that in the communication apparatus 1100 shown in FIG. 11, the processor 1110 may correspond to the processing module 1020 in the communication apparatus 1000, and the interface circuit 1130 may correspond to the transceiver module 1010 in the communication apparatus 1000.

It should be further understood that the coupling in embodiments of this application is an indirect coupling or a communication connection between apparatuses, units, or modules, may be in an electrical, mechanical, or another form, and is used for information exchange between the apparatuses, the units, or the modules. A specific connection medium between the at least one processor 1110, the at least one memory 1120, the interface circuit 1130, and the power supply circuit 1140 is not limited in this embodiment of this application. In this embodiment of this application, in FIG. 11, the processor 1110, the memory 1120, the interface circuit 1130, and the power supply circuit 1140 are connected through a bus 1150. The bus 1150 is represented by a bold line in FIG. 11, and a manner of connection between other components is merely described as a schematic illustration and is not intended for limitation. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

It should be noted that, the foregoing method embodiments may be applied to a processor, or implemented by a processor. The processor may be an integrated circuit chip and has signal processing capability. In an implementation process, steps in the foregoing method embodiments can be implemented by using a hardware integrated logic circuit in the processor, or by using instructions in a form of software.

The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or a part of the methods provided in the foregoing embodiments may be implemented by software, hardware, firmware, or any combination thereof. When software is used to implement embodiments, all or a part of embodiments may be implemented in a form of a computer program product. The computer program product may include one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic disk), an optical medium (for example, a DVD), a semiconductor medium (for example, a solid state disk solid state disk (SSD)), or the like.

An embodiment of this application further provides a communication system. The communication system includes the foregoing SF and UDM.

An embodiment of this application further provides a computer program product. The computer program product includes a computer program (which may also be referred to as code or instructions). When the computer program is run, a computer is caused to perform the method performed by the SF network element in any one of embodiments shown in FIG. 6 to FIG. 9, or a computer is caused to perform the method performed by the UDM network element in any one of embodiments shown in FIG. 7 to FIG. 9.

An embodiment of this application further provides a computer-readable storage medium. The computer-readable storage medium stores a computer program (which may also be referred to as code or instructions). When the computer program is run, the computer is caused to perform the method performed by the SF network element in any one of embodiments shown in FIG. 6 to FIG. 9, or the computer is caused to perform the method performed by the UDM network element in any one of embodiments shown in FIG. 7 to FIG. 9.

An embodiment of this application further provides a chip system. The chip system includes at least one processor, configured to perform the method performed by the SF network element in any one of embodiments shown in FIG. 6 to FIG. 9, or configured to implement the method performed by the UDM network element in any one of embodiments shown in FIG. 7 to FIG. 9.

Optionally, the chip system further includes a memory, the memory is configured to store program instructions and data, and the memory is located inside or outside the processor.

Optionally, the chip system further includes an interface circuit and/or a power supply circuit, the interface circuit is configured to perform data transmission, and the power supply circuit is configured to supply power to the chip system. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a sensing request, wherein the sensing request is used to request sensing in a sensing area; and
obtaining a target service requirement, wherein the target service requirement is determined based on the sensing area, and the target service requirement is used to determine a sensing key performance indicator KPI.

2. The method according to claim 1, wherein the obtaining the target service requirement comprises:
sending a service requirement request to a data management function network element, wherein the service requirement request indicates the sensing area;
receiving N service requirements from the data management function network element, wherein the N service requirements are determined based on the sensing area, and N is a positive integer; and
obtaining the target service requirement from the N service requirements.

3. The method according to claim 1, wherein the obtaining the target service requirement comprises:
determining N service requirements based on the sensing area and a mapping relationship, wherein the mapping relationship indicates a correspondence between at least one sensing area and at least one service requirement, and N is a positive integer; and
obtaining the target service requirement from the N service requirements.

4. The method according to claim 1, wherein the sensing request carries N service requirements, and N is a positive integer; and
the obtaining the target service requirement comprises:
obtaining the target service requirement from the N service requirements.

5. The method according to claim 3, wherein when N>1, the obtaining the target service requirement from the N service requirements comprises:
obtaining the target service requirement from the N service requirements based on a correspondence between the N service requirements and N time periods, and time information of the sensing request.

6. The method according to any one of claims 2 to 4, wherein when N>1, the obtaining the target service requirement from the N service requirements comprises:
obtaining the target service requirement from the N service requirements based on a correspondence between the N service requirements and N ranges of a quantity of terminals, and a quantity of terminals comprised in the sensing area.

7. The method according to claim 6, wherein before the obtaining the target service requirement from the N service requirements based on the correspondence between the N service requirements and the N ranges of the quantity of terminals, and the quantity of terminals comprised in the sensing area, the method further comprises:
obtaining, from an access and mobility management function network element, the quantity of terminals comprised in the sensing area.

8. The method according to any one of claims 1 to 7, wherein before the obtaining the target service requirement, the method further comprises:
determining that sensing is allowed in the sensing area.

9. The method according to claim 8, wherein the sensing request carries at least one of the following: an identifier of an application function network element, an indication of the sensing area, a requested service type, or a requested service requirement; and
the determining that sensing is allowed in the sensing area comprises:
determining that sensing is allowed in the sensing area when at least one of the following is met: the sensing area belongs to a predefined area range, the service type is a predefined service type allowed to be triggered, a sensing KPI corresponding to the requested service requirement belongs to a predefined sensing KPI range, the time information of the sensing request belongs to a predefined time interval, or the application function network element identified by the identifier of the application function network element is a predefined application function network element allowed to be triggered.

10. The method according to any one of claims 1 to 7, wherein the sensing request carries at least one of the following: an identifier of an application function network element, an indication of the sensing area, a requested service type, or a requested service requirement; and
before the obtaining the target service requirement, the method further comprises:
obtaining the target service requirement when it is determined that at least one of the following is met: the sensing area belongs to a predefined area range, the service type is a predefined service type allowed to be triggered, a sensing KPI corresponding to the requested service requirement belongs to a predefined sensing KPI range, the time information of the sensing request belongs to a predefined time interval, or the application function network element identified by the identifier of the application function network element is a predefined application function network element allowed to be triggered.

11. The method according to any one of claims 1 to 10, wherein the sensing request is from the application function network element, the sensing request carries the requested service requirement, and the method further comprises:
sending a service requirement confirmation request to the application function network element, wherein the service requirement confirmation request is used to request to use the target service requirement, and the target service requirement is different from the requested service requirement;
receiving a service requirement confirmation reply from the application function network element, wherein the service requirement confirmation reply indicates consent or non-consent to using the target service requirement; and
when the service requirement confirmation reply indicates consent to using the target service requirement, initiating a sensing procedure based on the target service requirement; or
when the service requirement confirmation reply indicates non-consent to using the target service requirement, sending a rejection message to the application function network element, wherein the rejection message is used to reject the sensing request.

12. A communication method, comprising:
receiving a service requirement request from a sensing function network element, wherein the service requirement request indicates a sensing area;
determining N service requirements based on the sensing area and a mapping relationship, wherein the mapping relationship indicates a correspondence between at least one sensing area and at least one service requirement, and N is a positive integer; and
sending the N service requirements to the sensing function network element.

13. The method according to claim 12, wherein when N=1, the N service requirements are target service requirements.

14. The method according to claim 13, wherein the determining the N service requirements based on the sensing area and the mapping relationship comprises:
determining P service requirements based on the sensing area and the mapping relationship, wherein P is a positive integer; and
determining the N service requirements from the P service requirements based on a correspondence between the at least one service requirement and at least one time period, and time information of the service requirement request.

15. The method according to claim 12, wherein when N>1, the method further comprises:
sending, to the sensing function network element, a correspondence between the N service requirements and N ranges of a quantity of terminals.

16. The method according to any one of claims 12 to 15, wherein the method further comprises:
receiving a parameter configuration request, wherein the parameter configuration request comprises the correspondence between the at least one sensing area and the at least one service requirement; and
determining the mapping relationship based on the parameter configuration request.

17. A communication method, comprising:
receiving a sensing authorization request from a network capability exposure function network element, wherein the sensing authorization request is used to request authorization of a sensing request from an application function network element, and the sensing request is used to request sensing in a sensing area;
when determining to authorize the sensing request, determining N service requirements based on the sensing area and a mapping relationship, wherein the mapping relationship indicates a correspondence between at least one sensing area and at least one service requirement; and
sending the N service requirements to the network capability exposure function network element.

18. The method according to claim 17, wherein N>1, and the method further comprises:
sending, to the network capability exposure function network element, a correspondence between the N service requirements and N ranges of a quantity of terminals.

19. The method according to claim 17 or 18, wherein the sensing authorization request carries an identifier of the application function network element, and the method further comprises:
determining, based on the identifier of the application function network element, whether to authorize the sensing request.

20. The method according to claim 19, wherein the sensing authorization request further carries a requested service requirement, and the method further comprises:
when determining, based on the identifier of the application function network element, to authorize the sensing request, determining that the requested service requirement does not meet the service requirement corresponding to the sensing area comprised in the mapping relationship; and
determining to reject authorization of the sensing request.

21. A communication apparatus, comprising one or more functional units, configured to implement the method according to any one of claims 1 to 11, or configured to implement the method according to any one of claims 12 to 16, or configured to implement the method according to any one of claims 17 to 20.

22. A communication apparatus, comprising a processor, wherein the processor is configured to execute program code, to cause the communication apparatus to implement the method according to any one of claims 1 to 11, or implement the method according to any one of claims 12 to 16, or implement the method according to any one of claims 17 to 20.

23. A computer-readable storage medium, wherein the computer-readable storage medium stores a computer program, and when the computer program is executed by a processor, the method according to any one of claims 1 to 11 is performed, or the method according to any one of claims 12 to 16 is performed, or the method according to any one of claims 17 to 21 is performed.

24. A computer program product, comprising a computer program, wherein when the computer program is run, the method according to any one of claims 1 to 11 is performed, or the method according to any one of claims 12 to 16 is performed, or the method according to any one of claims 17 to 20 is performed.
